# EUROPÄISCHE PATENTSCHRIFT

(11) **EP 1 316 891 B1**
(45) Veröffentlichungstag und Bekanntmachung des Hinweises auf die Patenterteilung: **10.10.2007**
(21) Anmeldenummer: 01128727.3
(22) Anmeldetag: 03.12.2001
(51) Int. Cl.: G06F 13/42

(54) **Datenübertragungseinrichtung**
Data communication system
Dispositif de transmission de données

(43) Veröffentlichungstag der Anmeldung: 04.06.2003
(73) Patentinhaber: Infineon Technologies AG, 81669 München (DE)
(72) Erfinder: Barrenscheen, Jens, Dr., 81669 München (DE)
(74) Vertreter: Repkow, Ines

(56) Entgegenhaltungen:
- EP-A- 0 692 764
- WO-A-01/48621
- US-A- 5 347 559
- US-A- 5 713 000

## Beschreibung

Die vorliegende Erfindung betrifft eine Datenübertragungseinrichtung gemäß dem Oberbegriff des Patentanspruchs 1.

Eine solche Datenübertragungseinrichtung ist beispielsweise eine serielle oder parallele Schnittstelle einer programmgesteuerten Einheit wie beispielsweise eines Mikroprozessors, Mikrocontrollers oder eines Signalprozessors.

Eine solche Schnittstelle kann ihr von einer der anderen Komponenten der programmgesteuerten Einheit zugeführte Daten an einen anderen Baustein ausgeben, und/oder von einem anderen Baustein ausgegebene und für die programmgesteuerte Einheit bestimmte Daten empfangen und deren Weiterleitung innerhalb der programmgesteuerten Einheit veranlassen.

Der andere Baustein kann ebenfalls eine programmgesteuerte Einheit sein, oder ein beliebiger anderer Baustein wie beispielsweise ein Speicherbaustein.

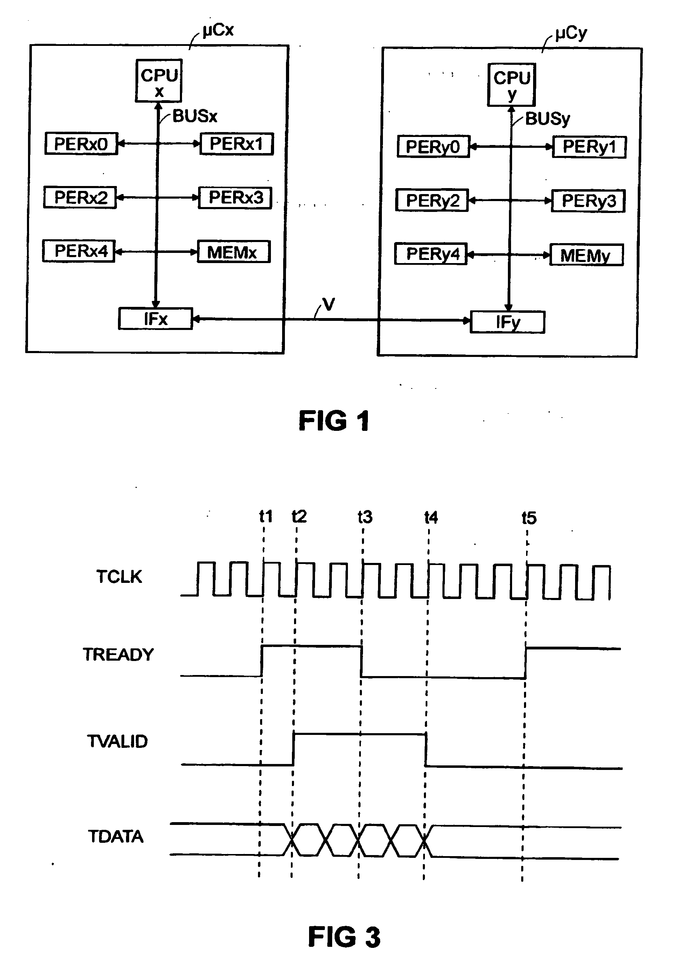

Eine Anordnung, bei welcher zwei programmgesteuerte Einheiten über in ihnen vorgesehene Schnittstellen Daten untereinander austauschen können, ist in Figur 1 gezeigt.

Die in der Figur 1 gezeigte Anordnung enthält einen ersten Mikrocontroller µCx und einen zweiten Mikrocontroller µCy.

Der erste Mikrocontroller µCx enthält eine CPU CPUx, Peripherieeinheiten PERx0 bis PERx4, einen Speicher MEMx, und eine Schnittstelle IFx, wobei die genannten Komponenten über einen internen Bus BUSx miteinander verbunden sind.

Der zweite Mikrocontroller µCy enthält eine CPU CPUy, Peripherieeinheiten PERy0 bis PERy4, einen Speicher MEMy, und eine Schnittstelle IFy, wobei die genannten Komponenten über einen internen Bus BUSy miteinander verbunden sind.

Die Schnittstelle IFx des ersten Mikrocontrollers µCx und die Schnittstelle IFy des zweiten Mikrocontrollers µCy sind über eine eine oder mehrere Leitungen umfassende Verbindung V miteinander verbunden.

Wenn es sich bei den Schnittstellen IFx und IFy um parallele Schnittstellen handelt, können Adressen, Daten, und Steuersignale gleichzeitig und folglich sehr schnell zwischen den Schnittstellen übertragen werden. Andererseits muß für die Schnittstellen IFx und IFy jedoch eine sehr große Anzahl von Pins vorgesehen werden, wodurch die programmgesteuerten Einheiten µCx und µCy sehr groß werden.

Wenn es sich bei den Schnittstellen IFx und IFy um serielle Schnittstellen handelt, können diese mit sehr viel weniger Pins auskommen. Andererseits müssen dann jedoch die Adressen, Daten, und Steuersignale seriell übertragen werden, wodurch für die Datenübertragung sehr viel Zeit benötigt wird.

In beiden Fällen, d.h. sowohl bei seriellen Schnittstellen, als auch bei parallelen Schnittstellen geht die Übertragung von Daten mit einer starken Belastung der CPUs der programmgesteuerten Einheiten einher. Die CPU der Daten ausgebenden programmgesteuerten Einheit muß mehrfach auf die Schnittstelle zugreifen, um dieser die von ihr auszugebenden Adressen, Daten und Steuersignale zuzuführen. Die CPU der Daten empfangenden programmgesteuerten Einheit muß mehrfach auf die Schnittstelle zugreifen, um die von dieser empfangenen Adressen, Daten, und Steuersignale abzuholen und die Daten an ihren Bestimmungsort innerhalb der programmgesteuerten Einheit weiterzuleiten.

In der EP-A-0 692 764 ist beschrieben, wie eine Datenübertragung zwischen einem Systemspeicher und einer PCI-Master-Einrichtung optimiert sein kann. Gemäß der dortigen Erfindung wird eine Anordnung vorgeschlagen, dass Adressen, die eine Zeilennummer und eine Spaltennummer enthalten, an einen Systemspeicher überträgt. Nachteil ist hierbei, dass die Zuordnungen "row address" zu Zeile und "column address" zu Spalte unveränderbar festlegen.

Der vorliegenden Erfindung liegt daher die Aufgabe zugrunde, eine Möglichkeit zu finden, durch welche zwischen verschiedenen Bausteinen zu übertragenden Daten mit geringem Aufwand schnell übertragen werden können.

Diese Aufgabe wird erfindungsgemäß durch die in dem Patentanspruch 1 beansprucht Datenübertragungseinrichtung gelöst.

Die beanspruchte Datenübertragungseinrichtung ermöglicht es, zwischen einer ersten Einrichtung und einer zweiten Einrichtung zu übertragende Daten mit geringem Aufwand schnell zu übertragen.

Vorteilhafte Weiterbildungen der Erfindung sind den Unteransprüchen, der folgenden Beschreibung, und den Figuren entnehmbar.

Die Erfindung wird nachfolgend anhand von Ausführungsbeispielen unter Bezugnahme auf die Figuren näher erläutert. Es zeigen
- Figur 1: eine Anordnung mit zwei Bausteinen, die jeweils eine Datenübertragungseinrichtung aufweisen, mittels welcher zwischen den Bausteinen Daten übertragen werden können,
- Figur 2: den Aufbau und die Verbindung der Datenübertragungseinrichtungen der in der Figur 1 gezeigten Anordnung,
- Figur 3: den zeitlichen Verlauf der zwischen den Datenübertragungseinrichtungen übertragenen Signale,
- Figur 4: eine Anordnung mit drei Bausteinen, die jeweils eine Datenübertragungseinrichtung aufweisen, mittels welcher zwischen den Bausteinen Daten übertragen werden können,
- Figur 5: den Aufbau einer Message, die zwischen zwei Datenübertragungseinrichtungen übertragen wird,
- Figur 6: den Aufbau einer Basisadressenübertragungs-Message,
- Figur 7: den Aufbau einer Schreibzugriffs-Message,
- Figur 8: den Aufbau einer Lesezugriffs-Message,
- Figur 9: den Aufbau einer Spezial-Schreibzugriffs-Message,
- Figur 10: den Aufbau einer Spezial-Lesezugriffs-Message,
- Figur 11: den Aufbau einer Antwort-Message,
- Figur 12: den Aufbau einer Kommando-Message, und
- Figur 13: den Aufbau eines Bausteins, welcher zwei der beschriebenen Datenübertragungseinrichtungen enthält, um innerhalb des betreffenden Bausteins zu transferierende Daten zu übertragen.

Die beschriebene Datenübertragungseinrichtung ist im betrachteten Beispiel die Schnittstelle eines Bausteins, über welche Daten zu einem anderen Baustein übertragen werden können, und über welche von einem anderen Baustein ausgegebene Daten empfangen werden können.

Der Baustein, dessen Bestandteil die beschriebene Datenübertragungseinrichtung ist, ist im betrachteten Beispiel ein Mikrocontroller. Bei dem Baustein könnte es sich jedoch auch um eine andere programmgesteuerte Einheit wie beispielsweise um einen Mikroprozessor oder einen Signalprozessor handeln, oder um einen beliebigen anderen Baustein wie beispielsweise einen Speicher-Chip.

Die Anordnung anhand welcher die Funktion der hier vorgestellten Datenübertragungseinrichtung beschrieben wird, ist die in der Figur 1 gezeigte Anordnung, d.h. eine zwei Mikrocontroller enthaltende Anordnung, wobei jedoch die Schnittstellen IFx und IFy dieser Mikrocontroller jeweils durch die im folgenden näher beschriebene Datenübertragungseinrichtung gebildet werden.

Bevor die Einzelheiten des Aufbaus und der Arbeitsweise der Schnittstellen IFx und IFy näher beschrieben werden, wird zunächst in allgemeiner Form die Funktion der Schnittstellen IFx und IFy beschrieben.

Wenn eine der Komponenten des Mikrocontrollers µCx an eine der Komponenten des Mikrocontrollers µCy Daten zu übertragen hat, überträgt sie diese Daten über den internen Bus BUSx zur Schnittstelle IFx, welche die erhaltenen Daten in ein bestimmtes Format umsetzt und über die Verbindung V zur Schnittstelle IFy überträgt. Die Schnittstelle IFy empfängt diese Daten, ermittelt deren Bestimmungsort innerhalb des Mikrocontrollers µCy, und überträgt die Daten schließlich über den Bus BUSy an ihren Bestimmungsort.

Entsprechendes gilt für den Fall, daß eine der Komponenten des Mikrocontrollers µCy an eine der Komponenten des Mikrocontrollers µCx Daten zu übertragen hat. In diesem Fall überträgt die betreffende Komponente des Mikrocontrollers µCy die zu übertragenden Daten über den internen Bus BUSy zur Schnittstelle IFy, welche die erhaltenen Daten in ein bestimmtes Format umsetzt und über die Verbindung V zur Schnittstelle IFx überträgt. Die Schnittstelle IFx empfängt diese Daten, ermittelt deren Bestimmungsort innerhalb des Mikrocontrollers µCx, und überträgt die Daten schließlich über den Bus BUSx an ihren Bestimmungsort.

Während die Schnittstelle IFy die über die Verbindung V erhaltenen Daten über den Bus BUSy an ihren Bestimmungsort innerhalb des Mikrocontrollers µCy überträgt, ist sie am Bus BUSy Bus-Master; während die Schnittstelle IFx die über die Verbindung V erhaltenen Daten über den Bus BUSx an ihren Bestimmungsort innerhalb des Mikrocontrollers µCx überträgt, ist sie am Bus BUSx Bus-Master.

Daß die Schnittstellen IFx und IFy an den Bussen BUSx bzw. BUSy Bus-Master werden können, ist eine der Besonderheiten der beschriebenen Schnittstellen IFx und IFx. Diese Besonderheit ermöglicht es, daß die Übertragung von Daten von der Schnittstelle zu deren Bestimmungsort innerhalb des die Schnittstelle enthaltenden Mikrocontrollers durch die Schnittstelle selbst, d.h. ohne Mitwirkung durch die CPU durchgeführt werden kann. Weil zur Datenübertragung keine CPU erforderlich ist, können unter Verwendung der beschriebenen Schnittstellen auch Datenübertragungen zu Bausteinen durchgeführt werden, die keine CPU aufweisen.

Die vorliegend betrachtete Schnittstelle weist darüber hinaus noch eine ganze Reihe weiterer Besonderheiten auf.

Bei den weiteren Erläuterungen wird der Einfachheit halber jeweils davon ausgegangen, daß Daten vom Mikrocontroller µCx zum Mikrocontroller µCy übertragen werden; die hierzu gemachten Ausführungen gelten jedoch für die entgegengesetzte Datenübertragungsrichtung entsprechend. Ferner wird davon ausgegangen, daß die CPU CPUx die Komponente des Mikrocontrollers µCx ist, die Daten zum Mikrocontroller µCy zu übertragen hat. Die Übertragung von Daten zum Mikrocontroller µCy kann jedoch auch durch eine beliebige andere Komponente des Mikrocontrollers µCx veranlaßt werden; hierfür gelten die folgenden Ausführungen entsprechend.

Eine der vorstehend erwähnten weiteren Besonderheiten der hier vorgestellten Schnittstelle, genauer gesagt eine im folgenden als zweite Besonderheit bezeichnete Besonderheit der hier vorgestellten Schnittstelle besteht darin, daß die Komponente des Mikrocontrollers, die Daten zum anderen Mikrocontroller übertragen möchte, im betrachteten Beispiel also die CPU CPUx des Mikrocontrollers µCx, der Schnittstelle IFx nur die zu übertragenden Daten, und insbesondere nicht die den Bestimmungsort dieser Daten innerhalb des Mikrocontrollers µCy repräsentierende Adresse zuführt. Diese Adresse kann von der Schnittstelle IFx selbst ermittelt werden, und zwar aus der Adresse, unter Verwendung welcher sie von der CPUx bei der Übermittlung der weiterzuleitenden Daten an sie angesprochen wird.

Die Adresse, unter Verwendung welcher die Schnittstelle IFx Von der CPU CPUx bei der Übermittlung der weiterzuleitenden Daten an sie angesprochen wird, wird im folgenden als die zur Schnittstellenadressierung verwendete Adresse bezeichnet; die den Bestimmungsort der weiterzuleitenden Daten innerhalb des Mikrocontrollers µCy repräsentierende Adresse wird im folgenden als Datenzieladresse bezeichnet.

Die zur Schnittstellenadressierung verwendbaren Adressen, genauer gesagt der diese Adressen umfassende Adreßbereich ist in mehrere (im betrachteten Beispiel in 4) Teilbereiche unterteilt. Diese Teilbereiche werden im folgenden als Pipes bezeichnet. Aus der Pipe, in welche die zur Schnittstellenadressierung verwendete Adresse fällt, kann die Schnittstelle IFx einen ersten Teil der Datenzieladresse ermitteln. Dieser, im folgenden als Basisadresse bezeichnete Datenzieladressen-Teil repräsentiert im betrachteten Beispiel die m höchstwertigen Bits der Datenzieladresse. m ist im betrachteten Beispiel variabel und wird durch die CPU CPUx festgelegt. Die Ermittlung der jeweils zu verwendenden Basisadresse erfolgt anhand einer der Schnittstelle IFx bekannten Zuordnung, durch welche jeder Pipe eine bestimmte Basisadresse zugeordnet ist.

Welcher Pipe welche Basisadresse zugeordnet ist, wird im betrachteten Beispiel durch die CPU CPUx festgelegt, und durch diese der Schnittstelle IFx mitgeteilt. Die Zuordnung ist veränderbar, vorzugsweise sogar dynamisch, d.h. während des Betriebes des Mikrocontrollers µCx veränderbar. D.h., die CPU CPUx kann einer jeden Pipe jederzeit eine andere Basisadresse zuordnen.

Zur Vermeidung von Mißverständnissen sei darauf hingewiesen, daß der einer Pipe zugeordnete Adreßbereich und die der betreffenden Pipe zugeordnete Basisadresse völlig unabhängig voneinander festgelegt werden können.

Die Ermittlung der zu verwendenden Basisadresse durch die Schnittstelle IFx gestaltet sich denkbar einfach. Die Schnittstelle IFx muß lediglich ermitteln, innerhalb welcher Pipe die zur Schnittstellenadressierung verwendete Adresse liegt, und dann aus der ihr bekannten Zuordnung die dieser Pipe zugeordnete Basisadresse ermitteln.

Der im folgenden als Adreßoffset bezeichnete restliche Teil der Datenzieladresse, genauer gesagt der die n niederwertigen Bits der Datenzieladresse umfassende Teil derselben kann aus der Lage der zur Schnittstellenadressierung verwendeten Adresse innerhalb der Pipe ermittelt werden, in welche diese fällt. n ist im betrachteten Beispiel variabel und wird durch die CPU CPUx festgelegt. Eine einfache, aber nicht die einzige Möglichkeit zur Ermittlung des Adreßoffset besteht darin, daß dieser durch Subtraktion einer innerhalb der betreffenden Pipe liegenden Referenzadresse von der zur Schnittstellenadressierung verwendeten Adresse ermittelt wird. Als Referenzadresse kann beispielsweise die Anfangsadresse der Pipe gewählt werden, in welche die zur Schnittstellenadressierung verwendete Adresse fällt.

Um die vollständige Datenzieladresse zu erhalten, müssen lediglich die Basisadresse und der Adreßoffset in der richtigen Reihenfolge zusammengesetzt (aneinandergereiht) werden.

Damit ist die Schnittstelle IFx auf eine sehr einfache Art und Weise in der Lage, die Datenzieladresse selbst zu ermitteln. Es besteht folglich keine Notwendigkeit, daß die CPU CPUx der Schnittstelle IFx diese Adresse in einem eigenen Buszyklus übermittelt. Dadurch wird die CPUx bei der Übertragung von Daten zum Mikrocontroller µCy weniger belastet als es bisher der Fall ist.

Die von der Schnittstelle IFx ermittelte Datenzieladresse kann die Schnittstelle IFx zusammen mit den an Mikrocontroller µCy weiterzuleitenden Daten an den Mikrocontroller µCx übertragen, wobei die Übertragung auf beliebige Art und Weise, also entweder seriell, oder parallel, oder wie nachfolgend beschrieben erfolgen kann.

Eine dritte Besonderheit der hier vorgestellten Schnittstelle besteht darin, daß die Schnittstelle IFx mit den an den Mikrocontroller µCy weiterzuleitenden Daten nicht die vollständige Datenzieladresse an den Mikrocontroller µCy übermittelt, sondern nur eine Pipe Number und den Adreßoffset, wobei die Pipe Number die Nummer der Pipe ist, in welche die zur Schnittstellenadressierung verwendete Adresse fällt.

Der die besagten Adreßinformationen empfangende Mikrocontroller µCy, genauer gesagt die Schnittstelle IFy desselben kann aus der Pipe Number und dem Adreßoffset die vollständige Datenzieladresse ermitteln. Hierzu muß die Schnittstelle IFy lediglich ermitteln, welche Basisadresse der Pipe Number zugeordnet ist, und dann die Basisadresse und den Adreßoffset zu der Adresse zusammenzusetzen.

Welche Basisadresse welcher Pipe Number zugeordnet ist, ist dem Mikrocontroller µCy bekannt, weil ihm dies vom Mikrocontroller µCx durch eine später noch genauer beschriebene Basisadressenübertragungs-Message mitgeteilt wurde; jedes Mal, wenn die CPU CPUx eine Konfiguration oder Umkonfiguration vornimmt, durch welche einer Pipe eine neue Basisadresse zugeordnet wird, versendet die Schnittstelle IFx automatisch die erwähnte Basisadressenübertragungs-Message an die Schnittstelle IFy, wobei die Schnittstelle IFy den Erhalt der Basisadressenübertragungs-Message zum Anlaß nimmt, der in der Basisadressenübertragungs-Message enthaltenen Pipe Number die in der Basisadressenübertragungs-Message enthaltene Basisadresse zuzuordnen, so daß die Schnittstelle IFy jederzeit einfach und zuverlässig ermitteln kann, welche Basisadresse sie bei der Datenzieladressen-Generierung zu verwenden hat.

Eine vierte Besonderheit der hier vorgestellten Schnittstelle besteht darin, daß die Schnittstelle IFx unter bestimmten Umständen auch auf die Übertragung des Adreßoffset zum Mikrocontroller µCy verzichten kann.

Dies ist deshalb so, weil sowohl die Schnittstelle IFx als auch die Schnittstelle IFy eine Adreßvorhersageeinheit enthalten, welche jeweils versucht, die nächste Datenzieladresse, oder zumindest den durch den Adreßoffset gebildeten Teil derselben vorherzusagen, und weil die Schnittstelle IFy bei einer richtigen Vorhersage des Adreßoffset den von der Adreßvorhersageeinheit vorhergesagten Adreßoffset verwenden kann, um die Datenzieladresse zu generieren. Nach welchen Regeln diese Adreßvorhersage erfolgt, spielt keine Rolle. Wichtig ist aber, daß die Vorhersagen in den Schnittstellen IFx und IFy jeweils zu den selben Ergebnissen führen.

Im betrachteten Beispiel wird davon ausgegangen, daß die Adreßvorhersageeinheiten "nur" den Adreßoffset vorhersagen. Die folgenden Ausführungen gelten jedoch für den Fall, daß die Adreßvorhersageeinheiten die komplette Datenzieladresse vorhersagen, entsprechend.

Wenn nun die Schnittstelle IFx feststellt, daß die Datenzieladresse, genauer gesagt der zur Generierung derselben zu verwendende Adreßoffset, mit dem von der Adreßvorhersageeinheit der Schnittstelle IFx vorhergesagten Adreßoffset übereinstimmt, muß der Adreßoffset nicht zur Schnittstelle IFy übertragen werden; es genügt, wenn der Schnittstelle IFy signalisiert wird, daß die Adreßvorhersageeinheit den Adreßoffset richtig vorhergesagt hat. In diesem Fall kann die Schnittstelle IFy den von ihrer Adreßvorhersageeinheit vorhergesagten Adreßoffset zur Datenzieladressen-Generierung verwenden, und ist nicht auf eine Übermittlung des zu verwendenden Adreßoffset durch die Schnittstelle IFx angewiesen.

Eine fünfte Besonderheit der hier vorgestellten Schnittstelle besteht darin, daß sie eine Interrupt-Erzeugungseinrichtung aufweist, und daß ihr von außerhalb der sie enthaltenden programmgesteuerten Einheit, genauer gesagt durch die ihr von einem anderen Baustein bzw. durch die Schnittstelle des anderen Bausteins befehlbar ist, einen bestimmten Interrupt Request zu erzeugen. Dadurch kann der Mikrocontroller µCx die Schnittstelle IFy des Mikrocontrollers µCy zur Erzeugung eines Interrupt-Request-Signals (den Mikrocontroller µCy zur Ausführung einer Interrupt-Service-Routine) veranlassen. Vorzugsweise kann die Interrupt-Erzeugungseinrichtung verschiedene Interrupt-Request-Signale, d.h. die Ausführung verschiedener Interrupt-Service-Routinen bewirkende Interrupt-Request-Signale ausgeben, wobei es der die Interrupt-Erzeugungseinrichtung enthaltenden Schnittstelle, d.h. im betrachteten Beispiel der Schnittstelle IFy vom Mikrocontroller µCx (der Schnittstelle IFx desselben) vorgebbar ist, welches Interrupt-Request-Signal auszugeben ist.

Eine sechste Besonderheit der hier vorgestellten Schnittstelle besteht darin, daß die Adressen, über welche die Schnittstelle über den internen Bus des sie enthaltenden Bausteins ansprechbar ist, so gewählt werden, daß sie vollständig oder teilweise mit den Adressen übereinstimmen, unter Verwendung welcher andere Komponenten der betreffenden programmgesteuerten Einheit über den internen Bus angesprochen werden. Beispielsweise wäre denkbar, daß die Adressen, über welche die Schnittstelle IFx über den internen Bus BUSx ansprechbar ist, die Adressen umfassen, durch welche der Speicher MEMx über den internen Bus BUSx ansprechbar ist. Dadurch kann erreicht werden, daß Daten, die in den Speicher MEMx geschrieben werden, automatisch mit einer gewissen kurzen Zeitverzögerung auch in den Speicher MEMy geschrieben werden, und/oder daß Daten, die aus dem Speicher MEMx ausgelesen werden, automatisch auch aus dem Speicher MEMy ausgelesen werden. Dadurch kann erreicht werden, daß der Inhalt des Speichers MEMy eine Kopie des Inhaltes des Speichers MEMx ist. Dies erweist sich beispielsweise beim Aufbau von fehlerredundanten und ausfallsicheren Systemen als vorteilhaft

Eine siebte Besonderheit der hier vorgestellten Schnittstelle besteht darin, daß die Schnittstelle nur auf nicht geschützte Komponenten der sie enthaltenden Mikrocontrollers zugreifen kann. Im betrachteten Beispiel ist es so, daß den Komponenten der Mikrocontrollers, die bei Bedarf vor Zugriffen durch die Schnittstelle geschützt werden sollen, ein Schutz-Bit oder dergleichen zugeordnet ist, von dessen Inhalt es abhängt, ob Zugriffe seitens der Schnittstelle auf die jeweilige Komponente ausgeführt werden oder nicht. Zusätzlich oder alternativ zur Verweigerung des Zugriffs auf eine durch ein Schutz-Bit geschützten Komponente durch die betreffende Komponente kann vorgesehen, daß die betreffende Komponente ein Interrupt-Request-Signal ausgibt, wenn auf sie zugegriffen wird. Dann kann die die Interrupt-Service-Routine ausführende Komponente, also der CPU entscheiden, wie ein solcher Zugriff zu behandeln ist, und/oder welche weiteren Maßnahmen zu ergreifen sind. Die Schutz-Bits werden durch die CPU des Mikrocontrollers, der die zu schützenden Komponenten enthält, gesetzt und zurückgesetzt. Auf diese Art und Weise kann verhindert werden, daß von außerhalb des Mikrocontrollers unberechtigte Zugriffe auf denselben erfolgen.

Die hier vorgestellte Schnittstelle weist alle genannten Besonderheiten auf. Es dürfte jedoch einleuchten und bedarf keiner näheren Erläuterung, daß sich die beschriebene Schnittstelle auch als vorteilhaft erweisen würde, wenn sie nur einen Teil der genannten Besonderheiten, also nur eine einzige oder bestimmte mehrere der genannten Besonderheiten aufwiese. Die genannten Besonderheiten können sowohl einzeln als auch in beliebigen Kombinationen zum Einsatz kommen.

Im folgenden werden der Aufbau und die Arbeitsweise der Schnittstellen IFx und IFy näher beschrieben.

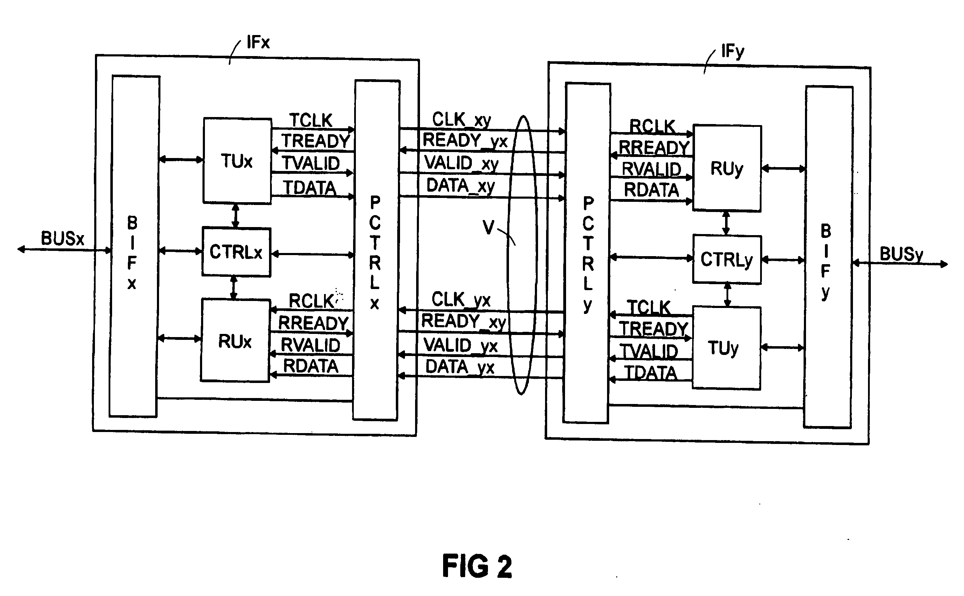

Die Schnittstellen IFx und IFy sind identisch aufgebaut. Der prinzipielle Aufbau der Schnittstellen IFx und IFy sowie der diese miteinander verbindenden Verbindung V ist in Figur 2 veranschaulicht.

Demnach enthält die Schnittstelle IFx ein Bus-Interface BIFx, eine Sendeeinheit TUx, eine Empfangseinheit RUx, eine Port-Steuereinrichtung PCTRLx, und eine die genannten Komponenten steuernde Steuereinrichtung CTRLx.

Die Schnittstelle IFx ist über das Bus-Interface BIFx an den internen Bus BUSx des Mikrocontrollers µCx angeschlossen, und über die Port-Steuereinrichtung PCTRLx an die die Schnittstelle IFx und die Schnittstelle IFy miteinander verbindende Verbindung V angeschlossen.

Die Schnittstelle IFy enthält ein Bus-Interface BIFy, eine Sendeeinheit TUy, eine Empfangseinheit RUy, eine Port-Steuereinrichtung PCTRLy, und eine die genannten Komponenten steuernde Steuereinrichtung CTRLy.

Die Schnittstelle IFy ist über das Bus-Interface BIFy an den internen Bus BUSy des Mikrocontrollers µCy angeschlossen, und über die Port-Steuereinrichtung PCTRLy an die die Schnittstelle IFx und die Schnittstelle IFy miteinander verbindende Verbindung V angeschlossen.

Die Sendeeinheit TUx gibt Signale bzw. Daten TCLK, TVALID, und TDATA an die Port-Steuereinrichtung PCTRLx aus, und bekommt von der Port-Steuereinrichtung PCTRLx ein Signal TREADY zugeführt; die Empfangseinheit RUx gibt ein Signal RREADY an die Port-Steuereinrichtung PCTRLx aus, und bekommt von der Port-Steuereinrichtung PCTRLx Signale bzw. Daten RCLK, RVALID, und RDATA zugeführt.

Die Sendeeinheit TUy gibt Signale bzw. Daten TCLK, TVALID, und TDATA an die Port-Steuereinrichtung PCTRLy aus, und bekommt von der Port-Steuereinrichtung PCTRLy ein Signal TREADY zugeführt; die Empfangseinheit RUy gibt ein Signal RREADY an die Port-Steuereinrichtung PCTRLy aus, und bekommt von der Port-Steuereinrichtung PCTRLy Signale bzw. Daten RCLK, RVALID, und RDATA zugeführt.

Die die Schnittstelle IFx und die Schnittstelle IFy miteinander verbindende Verbindung V umfaßt insgesamt 8 Leitungen, wobei 4 Leitungen zur Verbindung der Sendeeinheit TUx mit der Empfangseinheit RUy dienen, und 4 Leitungen zur Verbindung der Sendeeinheit TUy mit der Empfangseinheit RUx dienen.

Die 4 Leitungen, die zur Verbindung der Sendeeinheit TUx mit der Empfangseinheit RUy dienen, sind in der Figur 2 mit den Bezugszeichen CLK_xy, READY_yx, VALID_xy, und DATA_xy bezeichnet; die 4 Leitungen, die zur Verbindung der Sendeeinheit TUy mit der Empfangseinheit RUx dienen, sind in der Figur 2 mit den Bezugszeichen CLK_yx, READY_xy, VALID_yx, und DATA_yx bezeichnet. Die letzten beiden Buchstaben der Leitungsbezeichnungen, d.h. xy bzw. yx geben jeweils die Quelle und das Ziel der darüber übertragenen Signale bzw. Daten an; xy bedeutet, daß über die betreffende Leitung Signale bzw. Daten von µCx nach µCy übertragen werden, und yx bedeutet, daß über die betreffende Leitung Signale bzw. Daten von µCy nach µCx übertragen werden.

Von den genannten Leitungen verbinden
- die Leitung CLK_xy den das Signal TCLK ausgebenden Anschluß der Sendeeinheit TUx mit dem das Signal RCLK empfangenden Anschluß der Empfangseinheit RUy,
- die Leitung READY_yx den das Signal RREADY ausgebenden Anschluß der Empfangseinheit RUy mit dem das Signal TREADY empfangenden Anschluß der Empfangseinheit TUx,
- die Leitung VALID_xy den das Signal TVALID ausgebenden Anschluß der Sendeeinheit TUx mit dem das Signal RVALID empfangenden Anschluß der Empfangseinheit RUy,
- die Leitung DATA_xy den die Daten TDATA ausgebenden Anschluß der Sendeeinheit TUx mit dem die Daten RDATA empfangenden Anschluß der Empfangseinheit RUy,
- die Leitung CLK_yx den das Signal TCLK ausgebenden Anschluß der Sendeeinheit TUy mit dem das Signal RCLK empfangenden Anschluß der Empfangseinheit RUx,
- die Leitung READY_xy den das Signal RREADY ausgebenden Anschluß der Empfangseinheit RUx mit dem das Signal TREADY empfangenden Anschluß der Empfangseinheit TUy,
- die Leitung VALID_yx den das Signal TVALID ausgebenden Anschluß der Sendeeinheit TUy mit dem das Signal RVALID empfangenden Anschluß der Empfangseinheit RUx, und
- die Leitung DATA_yx den die Daten TDATA ausgebenden Anschluß der Sendeeinheit TUy mit dem die Daten RDATA empfangenden Anschluß der Empfangseinheit RUx.

Die von den Sendeeinheiten TUx und TUy ausgegebenen Signale TCLK sind Taktsignale zur Synchronisierung der mit den jeweiligen Sendeeinheiten verbundenen Empfangseinheiten RUy und RUx. Die Übertragung dieser Signale ermöglicht es, daß auch Daten zwischen Bausteinen transferiert werden können, die intern unter Verwendung von verschiedene Frequenzen und/oder verschiedene Phasenlagen aufweisenden Taktsignalen getaktet werden.

Die von den Empfangseinheiten RUx und RUy ausgegebenen Signale RREADY sind Signale, durch die signalisiert wird, daß die betreffenden Empfangseinheiten für den Empfang von Daten bereit sind.

Die von den Sendeeinheiten TUx und TUy ausgegebenen Signale TVALID sind Signale, durch die signalisiert wird, daß die betreffende Sendeeinheit gerade Daten TDATA an die das Signal TVALID empfangende Empfangseinheit ausgibt.

RREADY und TVALID können darüber hinaus auch als Handshake-Signale verwendet werden, anhand welcher die Übertragung der Daten TDATA koordiniert und überwacht wird.

Die von den Sendeeinheiten TUx und TUy ausgegebenen Daten TDATA enthalten die von den jeweiligen Schnittstellen IFx bzw. IFy eigentlich auszugebenden Daten.

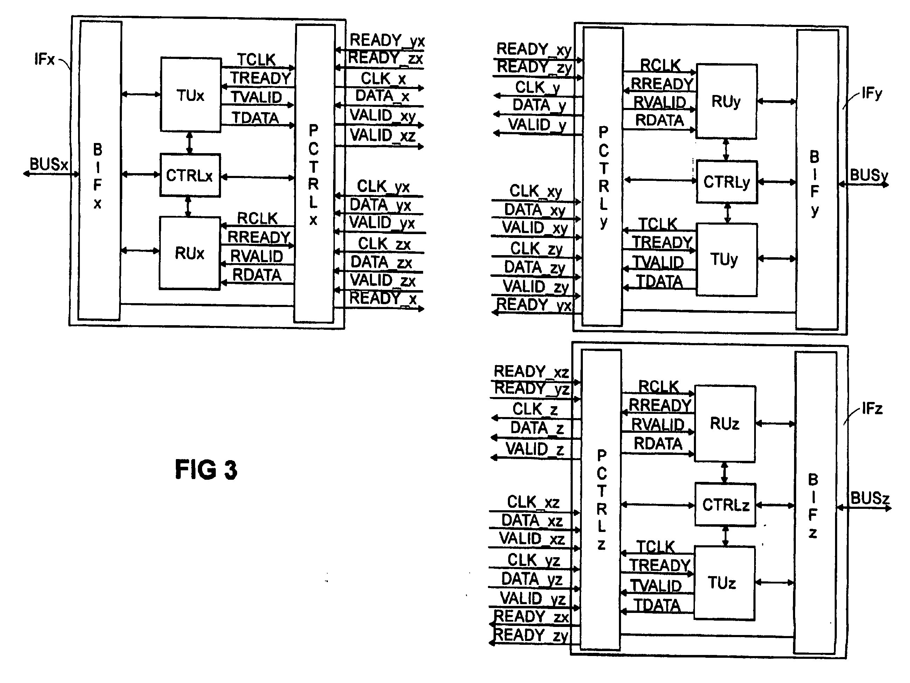

Figur 3 zeigt den zeitlichen Verlauf der Signale TCLK, TREADY, TVALID, und TDATA bei einer ordnungsgemäß ablaufenden Datenübertragung.

Das Taktsignal TCLK wird im betrachteten Beispiel immer, also auch dann, wenn keine Daten übertragen werden, ausgegeben. Es könnte jedoch auch vorgesehen werden, daß das Taktsignal TCLK nur in bestimmten Phasen, beispielsweise nur während der Übertragung von Daten und eine bestimmte Zeit danach ausgegeben wird.

Zu Beginn des in der Figur 3 dargestellten Zeitfensters befinden sich die Signale TREADY und TVALID auf dem niedrigen Pegel, und werden keine Daten TDATA ausgegeben.

Durch das auf dem niedrigen Pegel befindliche Signal TREADY wird signalisiert, daß die Empfangseinheit RU, zu welcher Daten übertragen werden sollen, nicht zum Empfang von Daten bereit ist; durch das auf dem niedrigen Pegel befindliche Signal TVALID wird signalisiert, daß gerade keine Daten TDATA ausgegeben werden.

Sobald die Empfangseinheit RU zum Empfang von Daten bereit ist, wechselt das Signal TREADY vom niedrigen Pegel auf den hohen Pegel. Dies ist im betrachteten Beispiel zu einem mit t1 bezeichneten Zeitpunkt der Fall.

Die Sendeeinheit TU erkennt hieran, daß sie nun mit der Ausgabe von Daten TDATA beginnen kann, sofern sie Daten zu übertragen hat. Im betrachteten Beispiel beginnt die Sendeeinheit TU zu einem nach dem Zeitpunkt t1 liegenden Zeitpunkt t2 mit der Ausgabe von Daten TDATA; gleichzeitig wechselt das Signal TVALID vom niedrigen auf den hohen Pegel.

Die Empfangseinheit RU erkennt an dem zum Zeitpunkt t2 erfolgenden Pegelwechsel von TVALID, daß nun Daten zu ihr übertragen werden, und liest diese Daten im Takt des Taktsignals TCLK ein.

Zu einem eine gewisse Zeit nach dem Zeitpunkt t2 liegenden Zeitpunkt t3 wechselt das Signal TREADY vom hohen Pegel auf den niedrigen Pegel. Dadurch wird der Sendeeinheit TU von der Empfangseinheit RU bestätigt, daß sie die an sie übertragenen Daten empfängt.

Die Sendeeinheit TU kann nach dem Zeitpunkt t3 noch beliebig lange weiter Daten TDATA übertragen. Im betrachteten Beispiel überträgt die Sendeeinrichtung TU bis zu einem nach dem Zeitpunkt t3 liegenden Zeitpunkt t4 weiter Daten TDATA. Mit dem Ende der Übertragung von TDATA, d.h. ebenfalls zum Zeitpunkt t4 wechselt auch TVALID wieder vom hohen Pegel auf den niedrigen Pegel.

Durch diesen Pegelwechsel von TVALID wird der Empfangseinrichtung RU signalisiert, daß keine Daten TDATA mehr übertragen werden.

Zu einem eine gewisse Zeit nach dem Zeitpunkt t4 liegenden Zeitpunkt t5 wechselt TREADY wieder vom niedrigen Pegel auf den hohen Pegel, wodurch signalisiert wird, daß die Empfangseinheit wieder zum Empfang von Daten bereit ist.

Über das Signal TREADY, genauer gesagt über eine Abweichung des zeitlichen Verlaufs des Signals TREADY von einem vorgegebenen (beispielsweise dem in der Figur 3 gezeigten) zeitlichen Verlauf, kann die Empfangseinrichtung RU der Sendeeinrichtung auch das Auftreten von Fehlern signalisieren.

Im betrachteten Beispiel ist es so,
- daß dann, wenn das Signal TREADY zwischen den Zeitpunkten t2 und t4, d.h. während der Übertragung von Daten TDATA nicht auf den niedrigen Pegel zurückgeht, sich also zum Zeitpunkt t4 immer noch auf dem hohen Pegel befindet, die von der Sendeeinheit TU ausgegebenen Daten von der Empfangseinheit RU nicht erhalten oder nicht entgegengenommen wurden,
- und daß dann, wenn die Zeit zwischen der fallenden Flanke von TVALID und der steigenden Flanke von TREADY, also der Zeitraum zwischen t4 und t5 zu groß ist, ein Parity Error bei der Datenübertragung aufgetreten ist (die Empfangseinheit RU reagiert auf festgestellte Parity Errors mit einer verzögerten Ausgabe von TREADY).

Es dürfte einleuchten und bedarf keiner näheren Erläuterung, daß durch den zeitlichen Verlauf des Signals TREADY auch weitere oder andere Fehler signalisiert werden können. Dabei können die Fehler auch durch weitere oder andere Besonderheiten des zeitlichen Verlaufes von TREADY signalisiert werden. Auswertbare Besonderheiten des zeitlichen Verlaufes von TREADY können beispielsweise auch darin bestehen, daß die Zeit zwischen t2 und t3 größer oder kleiner ist als im ungestörten Normalfall, oder daß TREADY in kurzen zeitlichen Abständen (beispielsweise im Takt von TCLK) seinen Pegel wechselt.

Bei dem in der Figur 2 gezeigten Beispiel sind "nur" zwei Bausteine miteinander verbunden. Unter Verwendung der beschriebenen Schnittstellen können auf sehr einfache Weise auch mehr als zwei Bausteine miteinander verbunden werden.

Wenn mehrere Bausteine miteinander verbunden werden sollen, genauer gesagt wenn beispielsweise die Schnittstelle wahlweise zu einem von n Bausteinen Daten übertragen können soll, oder Daten von einer von n Bausteinen empfangen können soll, müssen lediglich
- eine zusätzliche Leitungen umfassende Verbindung V, und
- eine Port-Steuereinrichtung PCTRL vorgesehen werden, durch welche einstellbar ist, mit welcher Leitung der Verbindung V die Ein- und Ausgangsanschlüsse der Sendeeinheit TU und der Empfangseinheit RU verbunden werden.

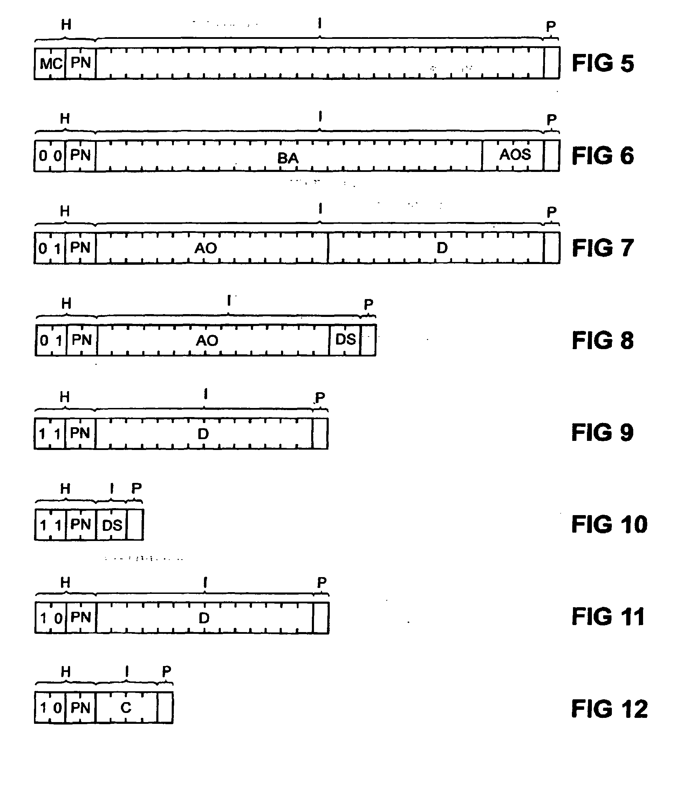

In der Figur 4 ist ein Beispiel dargestellt, bei welchen drei Bausteine, genauer gesagt drei Mikrocontroller µCx, µCy, und µCz über ihre Schnittstellen IFx, IFy, und IFz miteinander verbunden sind.

Wie aus der Figur 4 ersichtlich ist, werden bestimmte Leitungen der Verbindung V doppelt genutzt. Beispielsweise werden Daten, die von µCx nach µCy zu übertragen sind, über die selbe Leitung (DATA_x) übertragen wie Daten, die von µCx nach µCz zu übertragen sind. Andererseits müssen bestimmte Signale über verschiedene Leitungen zu den verschiedenen Bausteinen übertragen werden. Dies ist beispielsweise beim Signal TVALID der Fall: das von µCx an µCy auszugebende TVALID wird über eine andere Leitung (VALID_xy) übertragen als das von µCx an µCz auszugebende TVALID (VALID_xz).

Die Sendeeinheit TU und die Empfangseinheit RU bleiben jedoch unverändert. D.h., sie weisen genau so viele Ein- und Ausgabeanschlüsse auf wie es bei der in der Figur 2 gezeigten Anordnung, wo nur zwei Bausteine miteinander verbunden sind, der Fall ist. Dies ist möglich, weil die Port-Steuereinrichtungen über Auswahleinrichtungen wie beispielsweise Multiplexer verfügen, mittels welcher einstellbar ist, welche Leitung der Verbindung V mit welchem Anschluß der Sendeeinheit TU und der Empfangseinheit RU verbunden wird. Die Ansteuerung der Auswahleinrichtung ist vorzugsweise dynamisch, d.h. während des Betriebes der Bausteine veränderbar. Dadurch ist es beispielsweise möglich, daß das von der Sendeeinheit ausgegebene Signal TVALID in bestimmten Phasen (wenn Daten an µCy auszugeben sind) über die Leitung VALID_xy zu µCy übertragen wird, und in anderen Phasen (wenn Daten an µCz auszugeben sind) über die Leitung VALID_xz zu µCz übertragen wird.

Die Steuerung der erwähnten Auswahleinrichtungen erfolgt im betrachteten Beispiel über Funktionsregister, genauer gesagt unter Verwendung von in den Funktionsregistern gespeicherten Daten. Der Inhalt der Funktionsregister ist von außerhalb der Schnittstelle IF, beispielsweise durch die CPU oder eine sonstige Steuereinrichtung des die betreffende Port-Steuereinrichtung PCTRL enthaltenden Bausteins, und/oder durch der Schnittstelle IF von einem anderen Baustein zugeführte Daten veränderbar.

Die von den Schnittstellen ausgegebenen Daten TDATA sind bitweise seriell übertragene Messages, deren Aufbau in Figur 5 veranschaulicht ist.

Gemäß Figur 5 besteht eine Message aus einem 4 Bits umfassenden Header H, einem x Bits umfassenden Informations-Feld I, und einem Parity Bit P, wobei der Header H seinerseits wiederum aus einem 2 Bits umfassenden Message-Code-Feld MC und einem 2 Bits umfassenden Pipe-Number-Feld PN besteht.

Im Message-Code-Feld MC wird ein Message Code übertragen, welcher angibt, um welche Art von Message es sich handelt.

Im betrachteten Beispiel ist es so,
- daß der Message Code 00 angibt, daß der die Message ausgebende Baustein durch die betreffende Message an den die Message empfangenden Baustein eine Basisadresse übermittelt (eine solche Message wird im folgenden als Basisadressenübertragungs-Message bezeichnet),
- daß der Message Code 01 angibt,
   - daß der die Message ausgebende Baustein durch die betreffende Message Daten an den die Message empfangenden Baustein ausgibt (eine solche Message wird im folgenden als Schreibzugriffs-Message bezeichnet), oder
   - daß der die Message ausgebende Baustein durch die betreffende Message Daten aus dem die Message empfangenden Baustein anfordert (eine solche Message wird im folgenden als Lesezugriffs-Message bezeichnet),
- daß der Message Code 10 angibt,
   - daß der die Message ausgebende Baustein durch die betreffende Message ein Kommando an den die Message empfangenden Baustein ausgibt (eine solche Message wird im folgenden als Kommando-Message bezeichnet), oder
   - daß der die Message ausgebende Baustein durch die betreffende Message auf eine vorangehende Anforderung seitens des die Message empfangenden Bausteins antwortet (eine solche Message wird im folgenden als Antwort-Message bezeichnet), und
- daß der Message Code 11 angibt,
   - daß der die Message ausgebende Baustein durch die betreffende Message auf eine besondere Art und Weise Daten an den die Message empfangenden Baustein ausgibt (eine solche Message wird im folgenden als Spezial-Schreibzugriffs-Message bezeichnet), oder
   - daß der die Message ausgebende Baustein durch die betreffende Message auf eine besondere Art und Weise Daten aus dem die Message empfangenden Baustein anfordert (eine solche Message wird im folgenden als Spezial-Lesezugriffs-Message bezeichnet).

Im Pipe-Number-Feld PN wird ein die vorstehend bereits erwähnte Pipe Number repräsentierender Wert übertragen. Dabei bezeichnet die Pipe Number 00 eine Pipe 0, die Pipe Number 01 eine Pipe 1, die Pipe Number 10 eine Pipe 2, und die Pipe Number 1 eine Pipe 3.

Das Parity Bit P einer Message ermöglicht es dem die Message empfangenden Baustein, zu überprüfen, ob die Message fehlerfrei übertragen wurde. Es dürfte einleuchten und bedarf keiner näheren Erläuterung, daß anstelle des Parity Bits auch ein anderer Code übertragen werden kann, der die Erkennung von Übertragungsfehlern ermöglicht, beispielsweise eine Checksum oder eine Signatur.

Der Inhalt und des Informations-Feldes I einer Message hängt von der Art der Message ab; die Länge des Informations-Feldes I hängt unter anderem ebenfalls (aber nicht ausschließlich) hiervon ab.

Der Aufbau einer Basisadressenübertragungs-Message ist in Figur 6 veranschaulicht.

Wie aus der Figur 6 ersichtlich ist, besteht das Informations-Feld I einer solchen Message aus einem Basisadressen-Feld BA und einem Adreßoffsetgrößen-Feld AOS. Im betrachteten Beispiel umfaßt das Basisadressen-Feld BA 28 Bits, und das Adreßoffsetgrößen-Feld AOS 4 Bits; die genannten Felder können jedoch auch beliebige andere Größen aufweisen.

Das Basisadressenfeld BA enthält die vorstehend bereits erwähnte Basisadresse. Diese Basisadresse ordnet die die betreffende Message empfangende Schnittstelle der im Pipe-Number-Feld angegebenen Pipe zu.

Das Adreßoffsetgrößen-Feld AOS enthält eine Information über die Länge (die Anzahl der Bits) eines Adreßoffset-Feldes von Messages, durch welche der Adreßoffset mit übertragen wird.

Eine Basisadressenübertragungs-Message wird immer dann, und zwar auch nur dann übertragen, wenn in der diese Message ausgebenden Schnittstelle einer der vorhandenen Pipes eine neue Basisadresse zugewiesen wird, oder wenn die Länge (die Anzahl der Bis) des Adreßoffset geändert wird..

Der Aufbau einer Schreibzugriffs-Message ist in Figur 7 veranschaulicht.

Wie aus der Figur 7 ersichtlich ist, besteht das Informations-Feld I einer solchen Message aus einem Adreßoffset-Feld AO und einem Daten-Feld D.

Die Message enthält keine Informationen über die Länge des Adreßoffset-Feldes AO und/oder die Länge des Daten-Feldes D.

Die Länge, d.h. die Anzahl der Bits des Adreßoffset-Feldes AO ist der die Message empfangenden Schnittstelle bekannt; es handelt sich um den im Adreßoffsetgrößen-Feld AOS der Basisadressenübertragungs-Message enthaltenen Wert. Die restlichen Bits des Informations-Feldes I gehören zum Daten-Feld D. Das Daten-Feld D umfaßt im betrachteten Beispiel 8, 16, oder 32 Bits.

Wenn eine Schnittstelle eine Schreibzugriffs-Message erhält, schreibt sie die im Daten-Feld D der Schreibzugriffs-Message enthaltenen Daten an deren Bestimmungsort innerhalb des die Schnittstelle enthaltenden Mikrocontrollers. Bevor die Schnittstelle dies tut, ermittelt sie zunächst den Bestimmungsort, d.h. die Datenzieladresse, an welche die Daten weiterzuleiten sind. Die Datenzieladresse wird aus der Basisadresse, welcher der im Pipe-Number-Feld PN der Schreibzugriffs-Message spezifizierten Pipe zugeordnet ist, und dem im Adreßoffset-Feld AO der Schreibzugriffs-Message enthaltenen Adreßoffset zusammengesetzt. Die Basisadresse enthält die höherwertigen Bits der Datenzieladresse, und der Adreßoffset die niederwertigen Bits der Datenzieladresse. Zusammengesetzt ergeben die Basisadresse und der Adreßoffset die gesuchte Datenzieladresse. Der zu verwendende Adreßoffset ist der die Schreibzugriffs-Message empfangenden Schnittstelle aus dem Adreßoffset-Feld der Schreibzugriffs-Message bekannt; die Basisadresse wurde der Schnittstelle durch die Basisadressenübermittlungs-Message übermittelt und ist der Schnittstelle folglich ebenfalls bekannt. Die Schnittstelle muß die ihr bekannten Adressen lediglich in der richtigen Reihenfolge aneinanderreihen, um die benötigte Datenzieladresse zu erhalten. Nachdem die Schnittstelle die Datenzieladresse ermittelt hat, fordert sie die Zuteilung des internen Busses an. Nachdem der Schnittstelle der Bus zugeteilt wurde, d.h. wenn die Schnittstelle Bus-Master ist, überträgt sie die im Daten-Feld D der Schreibzugriffs-Message enthaltenen Daten an die Datenzieladresse.

Der Aufbau einer Lesezugriffs-Message ist in Figur 8 veranschaulicht.

Wie aus der Figur 8 ersichtlich ist, besteht das Informations-Feld I einer solchen Message aus einem Adreßoffset-Feld AO und einem Datenmengen-Feld DS.

Die Message enthält keine Informationen über die Länge des Adreßoffset-Feldes AO und/oder die Länge des Datenmengen-Feldes DS. Die Länge, d.h. die Anzahl der Bits des Adreßoffset-Feldes AO ist der die Message empfangenden Schnittstelle jedoch bekannt; es handelt sich um den im Adreßoffsetgrößen-Feld AOS der Basisadressenübertragungs-Message enthaltenen Wert. Die restlichen Bits des Informations-Feldes I gehören zum Datenmengen-Feld DS. Das Datenmengen-Feld DS besteht im betrachteten Beispiel aus 2 Bits, könnte aber auch größer oder kleiner sein.

Wenn eine Schnittstelle eine Lesezugriffs-Message erhält, beschafft sie sich die durch die Lesezugriffs-Message angeforderte Daten von einer innerhalb des die Schnittstelle enthaltenden Mikrocontrollers vorhandenen Datenquelle, und leitet diese in einer Antwort-Message an den die Lesezugriffs-Message ausgebenden Baustein weiter. Bevor die Schnittstelle die angeforderten Daten beschafft, ermittelt sie zunächst die Datenquelle, d.h. die Datenquellenadresse, von welcher die Daten zu holen sind. Die Datenquellenadresse wird aus der Basisadresse, welcher der im Pipe-Number-Feld PN der Lesezugriffs-Message spezifizierten Pipe zugeordnet ist, und dem im Adreßoffset-Feld AO der Lesezugriffs-Message enthaltenen Adreßoffset zusammengesetzt. Die Basisadresse enthält die höherwertigen Bits der Datenquellenadresse, und der Adreßoffset die niederwertigen Bits der Datenquellenadresse. Zusammengesetzt ergeben die Basisadresse und der Adreßoffset die gesuchte Datenquellenadresse. Der zu verwendende Adreßoffset ist der die Lesezugriffs-Message empfangenden Schnittstelle aus dem Adreßoffset-Feld der Lesezugriffs-Message bekannt; die Basisadresse wurde der Schnittstelle durch die Basisadressenübermittlungs-Message übermittelt und ist der Schnittstelle folglich ebenfalls bekannt. Die Schnittstelle muß die ihr bekannten Adressen lediglich in der richtigen Reihenfolge aneinanderreihen, um die benötigte Datenquellenadresse zu erhalten. Nachdem die Schnittstelle die Datenquellenadresse ermittelt hat, fordert sie die Zuteilung des internen Busses an. Nachdem der Schnittstelle der Bus zugeteilt wurde, d.h. wenn die Schnittstelle Bus-Master ist, holt sie von der Datenquellenadresse die durch die Lesezugriffs-Message angeforderten Daten. Die zu holende bzw. weiterzuleitende Datenmenge wird durch das Datenmengen-Feld DS spezifiziert. Der Inhalt des Datenmengen-Feldes DS gibt an, ob durch die Lesezugriffs-Message 1 Byte, 2 Bytes, oder 4 Bytes angefordert werden. Die von der Datenquelle angeforderten Daten werden sodann mittels einer Antwort-Message an den die Lesezugriffs-Message ausgebenden Baustein weitergeleitet.

Eine Schreibzugriffs-Message und eine Lesezugriffs-Message werden durch den selben Message Code, nämlich den Message Code 01 gekennzeichnet, so daß sie anhand des Message Codes nicht voneinander unterscheidbar sind. Sie können aber anhand der unterschiedlichen Längen der Informations-Felder I unterschieden werden. Während das Informations-Feld I einer Schreibzugriffs-Message nämlich entweder den Adreßoffset plus 8, 16, oder 32 Bits umfaßt, umfaßt das Informations-Feld I einer Lesezugriffs-Message nur den Adreßoffset plus 2 Bits.

Der Aufbau einer Spezial-Schreibzugriffs-Message ist in Figur 9 veranschaulicht.

Wie aus der Figur 9 ersichtlich ist, besteht das Informations-Feld I einer solchen Message nur aus einem Daten-Feld D, und enthält im Gegensatz zur normalen Schreibzugriffs-Message insbesondere kein Adreßoffset-Feld AO.

Das Daten-Feld D enthält im betrachteten Beispiel wie das Daten-Feld D einer normalen Schreibzugriffs-Message 8, 16 oder 32 Bits.

Normalerweise wird dann, wenn ein Schreibzugriff auf einen Baustein durchgeführt werden soll, eine normale Schreibzugriffs-Message versandt. In bestimmten Fällen ist es aber möglich, sich einer keinen Adreßoffset enthaltenden Spezial-Schreibzugriffs-Message zu bedienen. Im betrachteten Beispiel ist unter bestimmten Umständen die Verwendung von Spezial-Schreibzugriff-Messages möglich, weil die miteinander kommunizierenden Schnittstellen jeweils eine Adreßvorhersageeinrichtung enthalten, wobei die in den verschiedenen Schnittstellen vorgesehenen Adreßvorhersageeinrichtungen exakt gleich arbeiten, genauer gesagt immer identische Vorhersagen treffen. Wenn nun eine Schnittstelle, die Daten an einen anderen Baustein übertragen möchte, feststellt, daß die Datenzieladresse innerhalb des anderen Bausteins die von der Adreßvorhersageeinrichtung vorhergesagte Datenzieladresse ist, oder daß der zur Bildung der Datenzieladresse zu verwendende Adreßoffset der von der Adreßvorhersageeinrichtung vorhergesagte Adreßoffset ist, so kann auf die Übertragung des Adreßoffset an den anderen Baustein verzichtet werden, weil ja die Adreßvorhersageeinrichtung des anderen Bausteins die zu verwendende Datenzieladresse bzw. den zu verwendenden Adreßoffset ebenfalls richtig vorhergesagt hat, und folglich die von der Adreßvorhersageeinrichtung vorhergesagte Datenzieladresse bzw. der von der Adreßvorhersageeinrichtung vorhergesagte Adreßoffset verwendet werden kann.

Abgesehen hiervon reagiert eine eine Spezial-Schreibzugriffs-Message erhaltende Schnittstelle wie eine eine normale Schreibzugriffs-Message erhaltende Schnittstelle. D.h., sie fordert die Zuteilung des internen Busses an und transferiert die im Daten-Feld D der Spezial-Schreibzugriffs-Message enthaltenen Daten zur wie beschrieben ermittelten Datenzieladresse.

Der Aufbau einer Spezial-Lesezugriffs-Message ist in Figur 10 veranschaulicht.

Wie aus der Figur 10 ersichtlich ist, besteht das Informations-Feld I einer solchen Message nur aus einem Datenmengen-Feld DS, und enthält im Gegensatz zur normalen Lesezugriffs-Message insbesondere kein Adreßoffset-Feld AO.

Das Datenmengen-Feld DS enthält im betrachteten Beispiel wie das Datenmengen-Feld DS einer normalen Schreibzugriffs-Message 2 Bits.

Normalerweise wird dann, wenn ein Lesezugriff auf einen Baustein durchgeführt werden soll, eine normale Lesezugriffs-Message versandt. In bestimmten Fällen ist es aber möglich, sich einer keinen Adreßoffset enthaltenden Spezial-Lesezugriffs-Message zu bedienen. Im betrachteten Beispiel ist unter bestimmten Umständen die Verwendung von Spezial-Lesezugriff-Messages möglich, weil die miteinander kommunizierenden Schnittstellen jeweils eine Adreßvorhersageeinrichtung enthalten, wobei die in den verschiedenen Schnittstellen vorgesehenen Adreßvorhersageeinrichtungen exakt gleich arbeiten, genauer gesagt immer identische Vorhersagen treffen. Wenn nun eine Schnittstelle, die Daten aus einem anderen Baustein anfordert, feststellt, daß die Datenquellenadresse innerhalb des anderen Bausteins die von der Adreßvorhersageeinrichtung vorhergesagte Adresse ist, oder daß der zur Bildung der Datenquellenadresse zu verwendende Adreßoffset der von der Adreßvorhersageeinrichtung vorhergesagte Adreßoffset ist, so kann auf die Übertragung des Adreßoffset an den anderen Baustein verzichtet werden, weil ja die Adreßvorhersageeinrichtung des anderen Bausteins die zu verwendende Datenquellenadresse bzw. den zu verwendenden Adreßoffset ebenfalls richtig vorhergesagt hat, und folglich die von der Adreßvorhersageeinrichtung vorhergesagte Datenquellenadresse bzw. der von der Adreßvorhersageeinrichtung vorhergesagte Adreßoffset verwendet werden kann.

Abgesehen hiervon reagiert eine eine Spezial-Lesezugriffs-Message erhaltende Schnittstelle wie eine eine normale Lesezugriffs-Message erhaltende Schnittstelle. D.h., sie fordert die Zuteilung des internen Busses an, beschafft sich von der wie beschrieben ermittelten Datenquellenadresse die durch die Spezial-Lesezugriffs-Message angeforderten Daten, und übermittelt diese in einer Antwort-Message an den die Spezial-Lesezugriffs-Message ausgebenden Baustein.

Eine Spezial-Schreibzugriffs-Message und eine Spezial-Lesezugriffs-Message werden durch den selben Message Code, nämlich den Message Code 11 gekennzeichnet, so daß sie anhand des Message Codes nicht voneinander unterscheidbar sind. Sie können aber anhand der unterschiedlichen Längen der Informations-Felder I unterschieden werden. Während das Informations-Feld einer Spezial-Schreibzugriffs-Message nämlich entweder 8, 16, oder 32 Bits umfaßt, umfaßt das Informations-Feld einer Spezial-Lesezugriffs-Message nur 2 Bits.

Der Aufbau einer Antwort-Message ist in Figur 11 veranschaulicht.

Wie aus der Figur 11 ersichtlich ist, besteht das Informations-Feld I einer solchen Message nur aus einem Daten-Feld D.

Das Daten-Feld D enthält wie das Daten-Feld D einer Schreibzugriffs-Message oder einer Spezial-Schreibzugriffs-Message 8, 16 oder 32 Bits.

Eine Antwort-Message wird ausgegeben, wenn dem die Antwort-Message ausgebenden Baustein zuvor eine Lesezugriffs-Message oder eine Spezial-Lesezugriffs-Message zugeführt wurde. Die Antwort-Message ist die Reaktion auf die Lesezugriffs-Message oder die Spezial-Lesezugriffs-Message. Genauer gesagt werden durch eine Antwort-Message die durch die Lesezugriffs-Message oder die Spezial-Lesezugriffs-Message angeforderten Daten ausgegeben.

Wenn eine Schnittstelle eine Antwort-Message erhält, transferiert sie die im Daten-Feld D der Antwort-Message enthaltenen Daten zu der Mikrocontroller-Komponente, auf deren Veranlassung die betreffenden Daten durch eine Lesezugriffs-Message oder eine Spezial-Lesezugriffs-Message angefordert wurden. Die Antwort-Message muß keine Information über die Datenzieladresse enthalten, weil der die Antwort-Message empfangende Baustein die in der Antwort-Message enthaltenen Daten ja selbst angefordert hat, und mithin weiß, wofür er die betreffenden Daten benötigt.

Der Aufbau einer Kommando-Message ist in Figur 12 veranschaulicht.

Wie aus der Figur 12 ersichtlich ist, besteht das Informations-Feld I einer solchen Message nur aus einem Kommando-Feld C.

Das Kommando-Feld C besteht im betrachteten Beispiel aus 4 Bits, könnte prinzipiell aber auch mehr oder weniger Bits umfassen.

Wenn eine Schnittstelle eine Kommando-Message erhält, führt sie ein durch das Kommando-Feld C und durch das Pipe-Number-Feld PN spezifiziertes Kommando aus, oder sorgt dafür, daß dieses Kommando ausgeführt wird.

Im betrachteten Beispiel lassen sich die Kommandos, deren Ausführung durch eine Kommando-Message veranlaßbar ist, in drei Gruppen unterteilen.

Die erste Gruppe von Kommandos enthält Kommandos, durch welche die die Kommando-Message erhaltende Schnittstelle konfiguriert wird.

Die zweite Gruppe von Kommandos enthält Kommandos, durch welche die die Kommando-Message erhaltende Schnittstelle dazu veranlaßt wird, ein bestimmtes Interrupt-Request-Signal zu erzeugen.

Die dritte Gruppe von Kommandos enthält Kommandos, deren Bedeutung durch das Programm festgelegt wird, das von dem die Kommando-Message erhaltenden Baustein, genauer gesagt, von der CPU desselben ausgeführt wird.

Es dürfte einleuchten und bedarf keiner näheren Erläuterung, daß die in den Kommando-Messages enthaltenen Kommandos prinzipiell beliebige Kommandos sein können, und daß die in den Kommando-Messages enthaltenen Kommandos prinzipiell durch beliebige Komponenten des die Kommando-Message erhaltenden Baustein ausgeführt werden können.

Eine Antwort-Message und eine Kommando-Message werden durch den selben Message Code, nämlich den Message Code 10 gekennzeichnet, so daß sie anhand des Message Codes nicht voneinander unterscheidbar sind. Sie können aber anhand der unterschiedlichen Längen der Informations-Felder I unterschieden werden. Während das Informations-Feld einer Antwort-Message nämlich entweder 8, 16, oder 32 Bits umfaßt, umfaßt das Informations-Feld einer Kommando-Message nur 4 Bits.

Die beschriebene Datenübertragungseinrichtung, genauer gesagt zwei der beschriebenen Datenübertragungseinrichtungen können auch verwendet werden, um Daten zwischen zwei Einrichtungen innerhalb eines einzigen Bausteins zu übertragen.

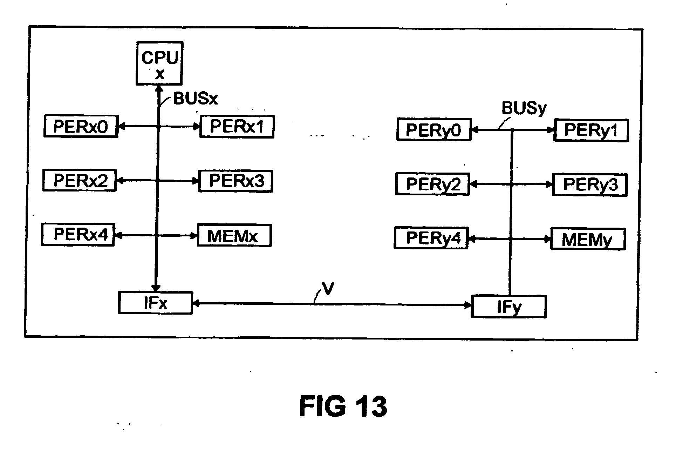

Ein möglicher Aufbau eines Bausteins, welcher zwei der beschriebenen Datenübertragungseinrichtungen enthält, um innerhalb des betreffenden Bausteins zu transferierende Daten zu transferieren, ist in Figur 13 dargestellt.

Der in der Figur 13 gezeigte Baustein ist ein Mikrocontroller, der eine CPU CPUx, Perpherieeinheiten PERx0 bis PERy4, Speicher MEMx und MEMy, Datenübertragungseinrichtungen IFx und IFy, Busse BUSx und BUSy, sowie eine Verbindung V enthält, wobei
- der Bus BUSx die CPU CPUx, die Peripherieeinheiten PERx0 bis PERx4, den Speicher MEMx, und die Datenübertragungseinrichtung IFx miteinander verbindet,
- der Bus BUSy die CPU CPUy, die Peripherieeinheiten PERy0 bis PERy4, den Speicher MEMy, und die Datenübertragungseinrichtung IFy miteinander verbindet, und
- die Verbindung V die Datenübertragungseinrichtung IFx und die Datenübertragungseinrichtung IFy miteinander verbindet.

Die genannten Komponenten des Mikrocontrollers entsprechen den mit den betreffenden Bezugszeichen bezeichneten Komponenten der in der Figur 1 gezeigten Anordnung. Insbesondere entsprechen der Aufbau und die Arbeitsweise der Datenübertragungseinrichtungen IFx und IFy der Anordnung gemäß Figur 13 exakt dem Aufbau und der Arbeitsweise der Datenübertragungseinrichtungen IFx und IFy der Anordnung gemäß Figur 1. Unterschiedlich ist nur, daß die betreffenden Komponenten im selben Baustein vorgesehen sind.

Den Datenübertragungseinrichtungen IFx und IFy obliegt es, Daten zwischen einer der am Bus BUSx angeschlossenen Einrichtungen und einer der am Bus BUSy angeschlossenen Einrichtungen zu übertragen.

Wenn eine der am Bus BUSx angeschlossenen Einrichtungen Daten zu einer der am Bus BUSy angeschlossenen Einrichtungen übertragen möchte, werden diese über den Bus BUSx zur Datenübertragungseinrichtung IFx, von dieser über die Verbindung V zur Datenübertragungseinrichtung IFy, und von dieser über den Bus BUSy zu der am Bus BUSy angeschlossenen Einrichtung transferiert; wenn eine der am Bus BUSy angeschlossenen Einrichtungen Daten zu einer am Bus BUSx angeschlossenen Einrichtungen übertragen möchte, werden diese über den Bus BUSy zur Datenübertragungseinrichtung IFy, von dieser über die Verbindung V zur Datenübertragungseinrichtung IFx, und von dieser über den Bus BUSx zu der am Bus BUSx angeschlossenen Einrichtung transferiert.

Dies geschieht exakt so wie es bei der Übertragung von Daten zwischen dem Mikrocontroller µCx und dem Mikrocontroller µCy der Anordnung gemäß Figur 1 der Fall ist. Es ist auch möglich, daß Daten, die zwischen zwei Einrichtungen, die am selben Bus angeschlossen sind, automatisch auch zu einer der am anderen Bus angeschlossenen Einrichtungen transferiert werden.

Es ist auch möglich, daß über die beschriebenen Datenübertragungseinrichtungen mehr als zwei Busse miteinander verbunden werden. Der Aufbau einer solchen Anordnung erfolgt analog zum Aufbau der in der Figur 3 gezeigten Anordnung.

Der Vollständigkeit halber sei angemerkt, daß der die mehreren Datenübertragungseinrichtungen enthaltende Baustein kein Mikrocontroller sein muß, sondern auch ein beliebiger anderer Baustein sein kann, bei welchem Daten zwischen zwei oder mehreren internen Bussen übertragen werden müssen.

Die Datenübertragungseinrichtungen IFx und IFy bilden zusammen eine Bus-Bridge, lassen sich aber mit erheblich geringerem Aufwand realisieren als herkömmliche Bus-Bridges. Insbesondere entfällt die Notwendigkeit, die über die Bus-Bridge miteinander zu verbindenden Busse zusammenzuführen; die Busse können beliebig weit voneinander entfernt sein und können über die Datenübertragungseinrichtungen IFx und IFy sowie die diese miteinander verbindende Verbindung V miteinander verbunden werden, was wegen der wenigen Leitungen, die die Verbindung V umfaßt, mit einem sehr geringen Aufwand verbunden ist. Bei der Verwendung herkömmlicher Bus-Brigdes müßten die Busse BUSx und BUSy, die jeweils über 100 Leitungen umfassen können, zusammengeführt werden, was erkennbar mit einem immensen Aufwand verbunden sein kann, und zudem wegen der daraus resultierenden Verlängerung von BUSx und/oder BUSy problematisch ist; längere Busse erfordern stärkere Bustreiber und haben wegen der längeren Laufzeiten der über diese übertragenen Daten oder Signale eine Verringerung der maximalen Datenübertragungsrate zur Folge.

Die beschriebene Datenübertragungseinrichtung ist nach alledem herkömmlichen Datenübertragungseinrichtungen in vielfacher Hinsicht überlegen. Sie ermöglicht es unter anderem, daß zu übertragende Daten auf sehr einfache Weise sehr schnell übertragen werden können, und weist darüber hinaus Funktionen auf, die bei herkömmlichen Datenübertragungseinrichtungen nicht vorhanden sind. Insbesondere können nicht nur Daten, sondern auch Buszugriffe transferiert werden: ein Zugriff auf eine bestimmte Einrichtung, kann automatisch einen entsprechenden Zugriff auf eine an einem anderen Bus angeschlossene oder in einem anderen Baustein vorgesehene Einrichtung bewirken.

### Bezugszeichenliste

- AO: Adreßoffset-Feld
- AOS: Adreßoffsetgrößen-Feld
- BA: Basisadressen-Feld
- BIFn: Bus-Interface
- BUSn: Bus
- C: Kommando-Feld
- CLK_nn: Leitung von V
- CPUn: CPU
- CTRLn: Steuereinrichtung
- DATA_nn: Leitung von V
- DS: Datenmengen-Feld
- H: Header
- I: Informations-Feld
- IFn: Schnittstelle
- MC: Message-Code-Feld
- MEMn: Speicher
- µCn: Mikrocontroller
- P: Parity-Bit
- PCTRLnn: Port-Steuereinrichtung
- PERn: Peripherieeinheit
- PN: Pipe-Number-Feld
- RCLK: RU zugeführtes Signal
- RDATA: RU zugeführte Daten
- READY_nn: Leitung von V
- RREADY: von RU ausgegebenes Signal
- RUn: Empfangseinheit
- RVALID: RU zugeführtes Signal
- TCLK: von TU ausgebenes Signal
- TDATA: von TU ausgebene Daten
- TREADY: TU zugeführtes Signal
- TVALID: von TU ausgebenes Signal
- TUn: Sendeeinheit
- V: Verbindung
- VALID_nn: Leitung von V

## Patentansprüche

1. Datenübertragungseinrichtung, über welche Daten, die von einer ersten Einrichtung (CPUx, PERx0-PERx4, MEMx) erhalten wurden und für eine zweite Einrichtung (CPUy, PERy0-PERy4, MEMy) bestimmt sind, an die zweite Einrichtung weitergeleitet werden,
- wobei zumindest die erste Einrichtung Bestandteil des die Datenübertragungseinrichtung enthaltenden Bausteins (µCx) ist,
- wobei die Datenübertragungseinrichtung an die zweite Einrichtung neben den an diese weiterzuleitenden Daten auch eine Information über die Stelle überträgt, an welche die weiterzuleitenden Daten innerhalb der zweiten Einrichtung zu übertragen sind, und
- wobei die Information über die Stelle, an welche die weiterzuleitenden Daten innerhalb der zweiten Einrichtung zu übertragen sind, die Nummer eines Adreßbereiches, und einen eine bestimmte Adresse innerhalb dieses Adreßbereiches spezifizierenden Adreßoffset umfaßt,
**dadurch gekennzeichnet,**
**daß** die Datenübertragungseinrichtung (IFx, IFy) vor der Weiterleitung von Daten an die zweite Einrichtung (CPUy, PERy0-PERy4, MEMy) eine Information über den der Adreßbereichs-Nummer zuzuordnenden Adreßbereich an die zweite Einrichtung übermittelt.

2. Datenübertragungseinrichtung nach Anspruch 1,
**dadurch gekennzeichnet,**
**daß** die Information über den der Adreßbereichs-Nummer zuzuordnenden Adreßbereich eine Adresse umfaßt, aus welcher sich die Lage des zuzuordnenden Adreßbereiches ermitteln läßt.

3. Datenübertragungseinrichtung nach Anspruch 2,
**dadurch gekennzeichnet,**
**daß** die Adresse die Anfangsadresse des zuzuordnenden Adreßbereiches ist.

4. Datenübertragungseinrichtung nach einem der Ansprüche 1 bis 3,
**dadurch gekennzeichnet,**
**daß** die Datenübertragungseinrichtung (IFx, IFy) nur dann eine Information über den der Adreßbereichs-Nummer zuzuordnenden Adreßbereich an die zweite Einrichtung (CPUy, PERyO-PERy4, MEMy) übermittelt, wenn eine Änderung in der Zuordnung erfolgen soll.

5. Datenübertragungseinrichtung nach einem der Ansprüche 1 bis 4,
**dadurch gekennzeichnet,**
**daß** die Datenübertragungseinrichtung (IFx, IFy) für jede Adreßbereichs-Nummer eine Information über den der Adreßbereichs-Nummer zuzuordnenden Adreßbereich an die zweite Einrichtung übermittelt.

6. Datenübertragungseinrichtungnach einem der vorhergehenden Ansprüche,
**dadurch gekennzeichnet,**
**daß** die Datenübertragungseinrichtung (IFx, IFy) eine Adreßvorhersageeinrichtung enthält, welche versucht, die Adresse oder einen Teil der Adresse vorherzusagen, an welche die weiterzuleitenden Daten innerhalb der zweiten Einrichtung (CPUy, PERy0-PERy4, MEMy) zu übertragen sind.

7. Datenübertragungseinrichtung nach Anspruch 6,
**dadurch gekennzeichnet,**
- **daß** die Datenübertragungseinrichtung (IFx, IFy) dann, wenn die von der Adreßvorhersageeinrichtung getroffene Vorhersage richtig ist, an die zweite Einrichtung (CPUy, PERyO-PERy4, MEMy) keine Information oder weniger Information über die Stelle überträgt, an welche die weiterzuleitenden Daten innerhalb der zweiten Einrichtung zu übertragen sind.

8. Datenübertragungseinrichtung nach Anspruch 6,
**dadurch gekennzeichnet,**
- **daß** die Datenübertragungseinrichtung (IFx, IFy) neben den weiterzuleitenden Daten auch eine Information über die Stelle übermittelt bekommt, an welche die weiterzuleitenden Daten innerhalb der zweiten Einrichtung (CPUy, PERyO-PERy4, MEMy) zu übertragen sind, und
- **daß** die Datenübertragungseinrichtung (IFx, IFy) dann, wenn sie von der ersten Einrichtung (CPUx, PERx0-PERx4, MEMx) keine Information oder weniger Information über die Stelle übermittelt bekommt, an welche die weiterzuleitenden Daten innerhalb der zweiten Einrichtung (CPUy, PERy0-PERy4, MEMy) zu übertragen sind, diese Stelle unter Verwendung des Vorhersageergebnisses der Adreßvorhersageeinrichtung ermittelt.

9. Datenübertragungseinrichtung nach einem der Ansprüche 1 bis 5,
**dadurch gekennzeichnet,**
**daß** die Datenübertragungseinrichtung (IFx, IFy) überprüft, ob davon ausgegangen werden kann, daß die zweite Einrichtung (CPUy, PERy0-PERy4, MEMy) die Stelle, an welche die weiterzuleitenden Daten innerhalb der zweiten Einrichtung zu übertragen sind, auch dann ermitteln kann, wenn ihr keine Information oder weniger Information über die betreffende Stelle übermittelt wird, und daß die Datenübertragungseinrichtung dann, wenn dies der Fall ist, an die zweite Einrichtung keine Information oder weniger Information über die Stelle überträgt, an welche die weiterzuleitenden Daten innerhalb der zweiten Einrichtung zu übertragen sind.

10. Datenübertragungseinrichtung nach einem der vorhergehenden Ansprüche,
**dadurch gekennzeichnet,**
**daß** die Datenübertragungseinrichtung (IFx, IFy) von der ersten Einrichtung (CPUx, PERx0-PERx4, MEMx) neben den weiterzuleitenden Daten auch eine Information über die Stelle übermittelt bekommt, an welche die weiterzuleitenden Daten innerhalb der zweiten Einrichtung (CPUy, PERyO-PERy4, MEMy) zu übertragen sind, und
**daß** die Datenübertragungseinrichtung dann, wenn sie von der ersten Einrichtung keine Information oder weniger Information über die Stelle übermittelt bekommt, an welche die weiterzuleitenden Daten innerhalb der zweiten Einrichtung zu übertragen sind, diese Stelle unter Verwendung von in der Datenübertragungseinrichtung vorhandenen Informationen ermittelt.

11. Datenübertragungseinrichtung nach Anspruch 9 oder 10,
**dadurch gekennzeichnet,**
**daß** die Datenübertragungseinrichtung (IFx, IFy) eine Adreßvorhersageeinrichtung enthält, welche versucht, die Adresse oder einen Teil der Adresse vorherzusagen, an welche die weiterzuleitenden Daten innerhalb der zweiten Einrichtung (CPUy, PERy0-PERy4, MEMy) zu übertragen sind.

12. Datenübertragungseinrichtung nach Anspruch 11,
**dadurch gekennzeichnet,**
**daß** die Datenübertragungseinrichtung (IFx, IFy) dann, wenn die von der Adreßvorhersageeinrichtung getroffene Vorhersage richtig ist, an die zweite Einrichtung (CPUy, PERyO-PERy4, MEMy) keine Information oder weniger Information über die Stelle überträgt, an welche die weiterzuleitenden Daten innerhalb der zweiten Einrichtung zu übertragen sind.

13. Datenübertragungseinrichtung nach Anspruch 11,
**dadurch gekennzeichnet,**
**daß** die Datenübertragungseinrichtung (IFx, IFy) dann, wenn sie von der ersten Einrichtung (CPUx, PERx0-PERx4, MEMx) keine Information oder weniger Information über die Stelle übermittelt bekommt, an welche die weiterzuleitenden Daten innerhalb der zweiten Einrichtung (CPUy, PERy0-PERy4, MEMy) zu übertragen sind, diese Stelle unter Verwendung des Vorhersageergebnisses der Adreßvorhersageeinrichtung ermittelt.

14. Datenübertragungseinrichtung nach einem der Ansprüche 1 bis 5,
**dadurch gekennzeichnet,**
**daß** die Datenübertragungseinrichtung (IFx, IFy) in der Lage ist, auf Veranlassung durch die erste Einrichtung (CPUx, PERx0-PERx4, MEMx) oder auf Veranlassung durch die zweite Einrichtung (CPUy, PERy0-PERy4 MEMy) ein Interrupt-Request-Signal zu erzeugen.

15. Datenübertragungseinrichtung nach Anspruch 14,
**dadurch gekennzeichnet,**
**daß** die Datenübertragungseinrichtung (IFx, IFy) durch ihr von der ersten Einrichtung (CPUx, PERx0-PERx4, MEMx) oder von der zweiten Einrichtung (CPUy, PERy0-PERy4, MEMy) zugeführten Daten zur Erzeugung eines Interrupt-Request-Signals veranlaßbar ist.

16. Datenübertragungseinrichtung nach Anspruch 15,
**dadurch gekennzeichnet,**
**daß** die Datenübertragungseinrichtung (IFx, IFy) die Daten, durch welche sie zur Erzeugung eines Interrupt-Request-Signals veranlaßt wird, nicht weiterleitet.

17. Datenübertragungseinrichtung nach einem der Ansprüche 14 bis 16,
**dadurch gekennzeichnet,**
**daß** die Datenübertragungseinrichtung (IFx, IFy) zur Erzeugung verschiedener, die Ausführung unterschiedlicher Interrupt-Service-Routinen bewirkender Interrupt-Request-Signale veranlaßbar ist.

18. Datenübertragungseinrichtung nach einem der Ansprüche 1 bis 5,
**dadurch gekennzeichnet,**
**daß** die Adressen, über welche die Datenübertragungseinrichtung (IFx, IFy) bei der Übertragung der weiterzuleitenden Daten von der ersten Einrichtung (CPUx, PERx0-PERx4, MEMx) zur Datenübertragungseinrichtung ansprechbar ist, so gewählt sind, daß sie vollständig oder teilweise mit den Adressen übereinstimmen, unter Verwendung welcher andere Komponenten des die Datenübertragungseinrichtung enthaltenden Bausteins (µCx, µCy) angesprochen werden.

19. Datenübertragungseinrichtung nach Anspruch 18,
**dadurch gekennzeichnet,**
**daß** die Adressen, über welche die Datenübertragungseinrichtung (IFx, IFy) bei der Übertragung der weiterzuleitenden Daten von der ersten Einrichtung (CPUx, PERx0-PERx4, MEMx) zur Datenübertragungseinrichtung ansprechbar ist, so gewählt sind, daß sie vollständig oder teilweise mit den Adressen übereinstimmen, unter Verwendung welcher ein Speicher (MEMx, MEMy) des die Datenübertragungseinrichtung enthaltenden Bausteins (µCx, µCy) angesprochen wird.

20. Datenübertragungseinrichtung nach Anspruch 19,
**dadurch gekennzeichnet,**
**daß** die Datenübertragungseinrichtung dafür sorgt, daß bei einem Zugriff auf den Speicher ein entsprechender Zugriff auf die zweite Einrichtung durchgeführt wird.

21. Datenübertragungseinrichtung nach Anspruch 19,
**dadurch gekennzeichnet,**
**daß** die Datenübertragungseinrichtung (IFx, IFy) Daten, die dem Speicher (MEMx, MEMy) zugeführt und in diesem gespeichert werden, zusätzlich an die zweite Einrichtung (CPUy, PERy0-PERy4, MEMy) weiterleitet.

22. Datenübertragungseinrichtung nach Anspruch 21,
**dadurch gekennzeichnet,**
**daß** die an die zweite Einrichtung (CPUy, PERy0-PERy4, MEMy) weitergeleiteten Daten in einen in der zweiten Einrichtung enthaltenen Speicher (MEMy) geschrieben werden.

23. Datenübertragungseinrichtung nach Anspruch 22,
**dadurch gekennzeichnet,**
**daß** die Datenübertragungseinrichtung (IFx, IFy) dafür sorgt, daß der Inhalt des Speichers (MEMy) der zweiten Einrichtung (CPUy, PERy0-PERy4, MEMy) eine Kopie des Inhalts des Speichers (MEMy) des die Datenübertragungseinrichtung (IFx, IFy) enthaltenden Bausteins (µCx, µCy) ist.

24. Datenübertragungseinrichtung nach Anspruch 22 oder 23,
**dadurch gekennzeichnet,**
**daß** der die Datenübertragungseinrichtung (IFx, IFy) enthaltende Baustein (µCx, µCy) und die zweite Einrichtung (CPUy, PERy0-PERy4, MEMy) identische Bausteine sind.

25. Datenübertragungseinrichtung nach Anspruch 24,
**dadurch gekennzeichnet,**
**daß** der Speicher (MEMx, MEMy) des die Datenübertragungseinrichtung (IFx, IFy) enthaltende Bausteins (µCx, µCy) und der Speicher (MEMx, MEMy) des zweiten Bausteins einander entsprechende Speicher sind.

26. Datenübertragungseinrichtung nach einem der Ansprüche 1 bis 5,
**dadurch gekennzeichnet,**
**daß** die Datenübertragungseinrichtung (IFx, IFy) die an einem die Datenübertragungseinrichtung und die zweite Einrichtung (CPUy, PERy0-PERy4, MEMy) miteinander verbindenden Bus (BUSx, BUSy) Bus-Master werden kann, und die weiterzuleitenden Daten auf eigene Veranlassung über den Bus an die zweite Einrichtung weiterleitet.

27. Datenübertragungseinrichtung, nach einem der Ansprüche 1 bis 5,
**dadurch gekennzeichnet,**
**daß** die Datenübertragungseinrichtung (IFx, IFy) die Information über die Stelle, an welche die weiterzuleitenden Daten innerhalb der zweiten Einrichtung (CPUy, PERyO-PERy4, MEMy) zu übertragen sind, aus der Adresse ermittelt, unter Verwendung welcher die Datenübertragungseinrichtung bei der Zuführung der weiterzuleitenden Daten an sie angesprochen wurde.

28. Datenübertragungseinrichtung nach Anspruch 27,
**dadurch gekennzeichnet,**
**daß** die Information über die Stelle, an welche die weiterzuleitenden Daten innerhalb der zweiten Einrichtung (CPUy, PERy0-PERy4, MEMy) zu übertragen sind, die Nummer eines Adreßbereiches und einen eine bestimmte Adresse innerhalb dieses Adreßbereiches spezifizierenden Adreßoffset umfaßt.

29. Datenübertragungseinrichtung nach Anspruch 28,
**dadurch gekennzeichnet,**
**daß** als Nummer des Adreßbereiches eine Nummer verwendet wird, die dem Adreßbereich zugeordnet ist, in welchen die Adresse fällt, unter Verwendung welcher die Datenübertragungseinrichtung (IFx, IFy) bei der Zuführung der weiterzuleitenden Daten an sie angesprochen wurde.

30. Datenübertragungseinrichtung nach Anspruch 28 oder 29,
**dadurch gekennzeichnet,**
**daß** als Adreßoffset ein Teil der Adresse verwendet wird, unter Verwendung welcher die Datenübertragungseinrichtung (IFx, IFy) bei der Zuführung der weiterzuleitenden Daten an sie angesprochen wurde.

31. Datenübertragungseinrichtung nach Anspruch 30,
**dadurch gekennzeichnet,**
**daß** der als Adreßoffset verwendete Teil der Adresse, unter Verwendung welcher die Datenübertragungseinrichtung (IFx, IFy) bei der Zuführung der weiterzuleitenden Daten an sie angesprochen wurde, ein Adreßteil ist, durch welchen eine bestimmte Adresse innerhalb des Adreßbereiches spezifiziert wird, in welchen die Adresse fällt, unter Verwendung welcher die Datenübertragungseinrichtung bei der Zuführung der weiterzuleitenden Daten an sie angesprochen wurde.

32. Datenübertragungseinrichtung nach einem der vorhergehenden Ansprüche,
**dadurch gekennzeichnet,**
**daß** eine der Einrichtungen, zwischen welchen über die Datenübertragungseinrichtung (IFx, IFy) Daten übertragen werden, Bestandteil des die Datenübertragungseinrichtung enthaltenden Bausteins (µCx, µCy) ist, und daß die andere Einrichtung ein anderer Baustein (µCx, µCy) oder Bestandteil eines anderen Bausteins ist.

33. Datenübertragungseinrichtung nach einem der vorhergehenden Ansprüche,
**dadurch gekennzeichnet,**
**daß** die Datenübertragungseinrichtung (IFx, IFy) eine Schnittstelle des die Datenübertragungseinrichtung enthaltenden Bausteins (µCx, µCy) ist, über welche der die Datenübertragungseinrichtung enthaltende Baustein Daten zu einem anderen Baustein übertragen kann, und über welche ein anderer Baustein Daten zu dem die Datenübertragungseinrichtung enthaltenden Baustein übertragen kann.

34. Datenübertragungseinrichtung nach Anspruch 32 oder 33,
**dadurch gekennzeichnet,**
**daß** der die Datenübertragungseinrichtung (IFx, IFy) enthaltende Baustein (µCx, µCy) eine programmgesteuerte Einheit ist.

35. Datenübertragungseinrichtung nach einem der Ansprüche 32 bis 34,
**dadurch gekennzeichnet,**
**daß** der andere Baustein (µCx, µCy) eine programmgesteuerte Einheit ist.

36. Datenübertragungseinrichtung nach einem der Ansprüche 32 bis 35,
**dadurch gekennzeichnet,**
**daß** jeder der Bausteine (µCx, µCy) eine Datenübertragungseinrichtung (IFx, IFy) enthält, und daß von der ersten Einrichtung (CPUx, PERx0-PERx4 MEMx) zur zweiten Einrichtung (CPUy, PERy0-PERy4, MEMy) zu übertragende Daten über die Datenübertragungseinrichtung des die erste Einrichtung enthaltenden Bausteins und über die Datenübertragungseinrichtung des anderen Bausteins übertragen werden.

37. Datenübertragungseinrichtung nach Anspruch 36,
**dadurch gekennzeichnet,**
**daß** die Datenübertragungseinrichtungen (IFx, IFy) identisch aufgebaute und/oder arbeitende Datenübertragungseinrichtungen sind.

38. Datenübertragungseinrichtung nach einem der Ansprüche 32 bis 37,
**dadurch gekennzeichnet,**
**daß** der die Datenübertragungseinrichtung (IFx, IFy) enthaltende Baustein und der andere Baustein identische Bausteine (µCx, µCy) sind.

39. Datenübertragungseinrichtung nach einem der Ansprüche 1 bis 31,
**dadurch gekennzeichnet,**
**daß** die Datenübertragungseinrichtung (IFx, IFy), die erste Einrichtung (CPUx, PERx0-PERx4, MEMx), und die zweite Einrichtung (CPUy, PERy0-PERy4, MEMy) Bestandteil des selben Bausteins sind.

40. Datenübertragungseinrichtung nach Anspruch 39,
**dadurch gekennzeichnet,**
**daß** in dem die Datenübertragungseinrichtung (IFx, IFy) enthaltenden Baustein eine zweite Datenübertragungseinrichtung vorgesehen ist,
- wobei die erste Datenübertragungseinrichtung (IFx) an einem ersten internen Bus (BUSx) des Bausteins angeschlossen ist, und die zweite Datenübertragungseinrichtung (IFx) an einem zweiten internen Bus (BUSx) des Bausteins angeschlossen ist, und
- wobei von der ersten Einrichtung (CPUx, PERx0-PERx4, MEMx) zur zweiten Einrichtung (CPUy, PERy0-PERy4, MEMy) zu übertragende Daten über den ersten internen Bus (BUSx) zur ersten Datenübertragungseinrichtung (IFx), von dieser über eine die erste Datenübertragungseinrichtung und die zweite Datenübertragungseinrichtung (IFy) miteinander verbindende Verbindung (V) zur zweiten Datenübertragungseinrichtung, und von dieser über den zweiten internen Bus (BUSy) zur zweiten Einrichtung übertragen werden.

41. Datenübertragungseinrichtung nach Anspruch 39,
**dadurch gekennzeichnet,**
**daß** in dem die Datenübertragungseinrichtung (IFx) enthaltenden Baustein eine zweite Datenübertragungseinrichtung (IFy) vorgesehen ist,
- wobei die erste Datenübertragungseinrichtung an einem ersten internen Bus (BUSx) des Bausteins angeschlossen ist, und die zweite Datenübertragungseinrichtung an einem zweiten internen Bus (BUSy) des Bausteins angeschlossen ist, und
- wobei von der zweiten Einrichtung (CPUy, PERyO-PERy4, MEMy) zur ersten Einrichtung (CPUx, PERx0-PERx4, MEMx) zu übertragende Daten über den zweiten internen Bus (BUSy) zur zweiten Datenübertragungseinrichtung (IFy), von dieser über eine die zweite Datenübertragungseinrichtung und die erste Datenübertragungseinrichtung (IFx) miteinander verbindende Verbindung V) zur ersten Datenübertragungseinrichtung, und von dieser über den ersten internen Bus (BUSx) zur ersten Einrichtung übertragen werden.

42. Datenübertragungseinrichtung nach einem der Ansprüche 39 bis 41,
**dadurch gekennzeichnet,**
**daß** die erste Datenübertragungseinrichtung (IFx) und die zweite Datenübertragungseinrichtung (IFy) identisch aufgebaute und/oder arbeitende Datenübertragungseinrichtungen sind.

43. Datenübertragungseinrichtung nach einem der Ansprüche 39 bis 42,
**dadurch gekennzeichnet,**
**daß** der Baustein eine programmgesteuerte Einheit ist.

## Claims

1. Data transmission device used to forward data which have been received from a first device (CPUx, PERx0-PERx4, MEMx) and are intended for a second device (CPUy, PERy0-PERy4, MEMy) to the second device,
- where at least the first device is part of the module (MCx) which contains the data transmission device,
- where the data transmission device transmits to the second device not only the data which are to be forwarded to this device but also information about the station to which the data to be forwarded need to be transmitted within the second device, and
- where the information about the station to which the data to be forwarded need to be transmitted within the second device comprises the number of an address range and an address offset specifying a particular address within this address range,
**characterized**
**in that**, before forwarding data to the second device (CPUy, PERy0-PERy4, MEMy), the data transmission device (IFx, IFy) transmits information about the address range which is to be allocated to the address range number to the second device.

2. Data transmission device according to Claim 1,
**characterized**
**in that** the information about the address range associated with the address range number comprises an address from which it is possible to ascertain the position of the address range which is to be allocated.

3. Data transmission device according to Claim 2,
**characterized**
**in that** the address is the start address of the address range which is to be allocated.

4. Data transmission device according to one of Claims 1 to 3,
**characterized**
**in that** the data transmission device (IFx, IFy) transmits information about the address range which is to be allocated to the address range number to the second device (CPUy, PERy0-PERy4, MEMy) only if the association needs to be changed.

5. Data transmission device according to one of Claims 1 to 4,
**characterized**
**in that**, for every address range number, the data transmission device (IFx, IFy) transmits information about the address range which is to be allocated to the address range number to the second device.

6. Data transmission device according to one of the preceding claims,
**characterized**
**in that** the data transmission device (IFx, IFy) contains an address prediction device which attempts to predict the address or a portion of the address to which the data to be forwarded need to be transmitted within the second device (CPUy, PERy0-PERy4, MEMγ).

7. Data transmission device according to Claim 6,
**characterized**
- **in that**, if the prediction made by the address prediction device is correct, the data transmission device (IFx, IFy) transmits to the second device (CPUy, PERy0-PERy4, MEMy) no information or less information about the station to which the data to be forwarded need to be transmitted within the second device.

8. Data transmission device according to Claim 6,
**characterized**
- **in that** the data transmission device (IFx, IFy) is sent not only the data which are to be forwarded but also information about the station to which the data to be forwarded need to be transmitted within the second device (CPUy, PERy0-PERy4, MEMy), and
- **in that**, if the first device (CPUx, PERx0-PERx4, MEMx) sends it no information or less information about the station to which the data to be forwarded need to be transmitted within the second device (CPUy, PERy0-PERy4, MEMy), the data transmission device (IFx, IFy) ascertains this station using the result of the prediction from the address prediction device.

9. Data transmission device according to one of Claims 1 to 5,
**characterized**
**in that** the data transmission device (IFx, IFy) checks whether it is possible to assume that the second device (CPUy, PERy0-PERy4, MEMy) is also able to ascertain the station to which the data to be forwarded need to be transmitted within the second device when it is sent no information or less information about the station in question, and in that, if this is the case, the data transmission device transmits to the second device no information or less information about the station to which the data to be forwarded need to be transmitted within the second device.

10. Data transmission device according to one of the preceding claims,
**characterized**
**in that** the first device (CPUx, PERx0-PERx4, MEMx) sends the data transmission device (IFx, IFy) not only the data which are to be forwarded but also information about the station to which the data to be forwarded need to be transmitted within the second device (CPUy, PERy0-PERy4, MEMy), and
**in that**, if the first device sends it no information or less information about the station to which the data to be forwarded need to be transmitted within the second device, the data transmission device ascertains this station using information which is available in the data transmission device.

11. Data transmission device according to Claim 9 or 10,
**characterized**
**in that** the data transmission device (IFx, IFy) contains an address prediction device which attempts to predict the address or a portion of the address to which the data to be forwarded need to be transmitted within the second device (CPUy, PERy0-PERy4, MEMy).

12. Data transmission device according to Claim 11,
**characterized**
**in that**, if the prediction made by the address prediction device is correct, the data transmission device (IFx, IFy) transmits to the second device (CPUy, PERy0-PERy4, MEMy) no information or less information about the station to which the data to be forwarded need to be transmitted within the second device.

13. Data transmission device according to Claim 11,
**characterized**
**in that**, if the first (CPUx, PERx0-PERx4, MEMx) device sends it no information or less information about the station to which the data to be forwarded need to be transmitted within the second device (CPUy, PERy0-PERy4, MEMy), the data transmission device (IFx, IFy) ascertains this station using the result of the prediction from the address prediction device.

14. Data transmission device according to one of Claims 1 to 5,
**characterized**
**in that** the data transmission device (IFx, IFy) is able to produce an interrupt request signal when prompted by the first device (CPUx, PERx0-PERx4, MEMx) or when prompted by the second device (CPUy, PERy0-PERy4, MEMy).

15. Data transmission device according to Claim 14,
**characterized**
**in that** the data transmission device (IFx, IFy) can be prompted to produce an interrupt request signal by data supplied to it from the first device (CPUx, PERx0-PERx4 MEMx) or from the second device (CPUy, PERy0-PERy4, MEMy).

16. Data transmission device according to Claim 15,
**characterized**
**in that** the data transmission device (IFx, IFy) does not forward the data which prompt it to produce an interrupt request signal.

17. Data transmission device according to one of Claims 14 to 16,
**characterized**
**in that** the data transmission device (IFx, IFy) can be prompted to produce various interrupt request signals prompting execution of different interrupt service routines.

18. Data transmission device according to one of Claims 1 to 5,
**characterized**
**in that** the addresses which can be used to address the data transmission device (IFx, IFy) when the data to be forwarded are transmitted from the first device (CPUx, PERx0-PERx4, MEMx) to the data transmission device are chosen such that they completely or partially match the addresses used to address other components of the module (MCx, MCy) which contains the data transmission device.

19. Data transmission device according to Claim 18,
**characterized**
**in that** the addresses which can be used to address the data transmission device (IFx, IFy) when the data to be forwarded are transmitted from the first device (CPUx, PERx0-PERx4 MEMx) to the data transmission device are chosen such that they completely or partially match the addresses used to address a memory (MEMx, MEMy) in the module (MCx, MCy) which contains the data transmission device.

20. Data transmission device according to Claim 19,
**characterized**
**in that** the data transmission device ensures that access to the memory involves corresponding access to the second device.

21. Data transmission device according to Claim 19,
**characterized**
**in that** the data transmission device (IFx, IFy) additionally forwards data which are supplied to and stored in the memory (MEMx, MEMy) to the second device (CPUy, PERy0-PERy4, MEMy).

22. Data transmission device according to Claim 21,
**characterized**
**in that** the data forwarded to the second device (CPUy, PERy0-PERy4, MEMy) are written to a memory (MEMy) contained in the second device.

23. Data transmission device according to Claim 22,
**characterized**
**in that** the data transmission device (IFx, IFy) ensures that the content of the memory (MEMy) in the second device (CPUy, PERy0-PERy4, MEMy) is a copy of the content of the memory (MEMy) in the module (MCx, MCy) which contains the data transmission device (IFx, IFy).

24. Data transmission device according to Claim 22 or 23,
**characterized**
**in that** the module (MCx, MCy) which contains the data transmission device (IFx, IFy) and the second device (CPUy, PERy0-PERy4, MEMy) are identical modules.

25. Data transmission device according to Claim 24,
**characterized**
**in that** the memory (MEMx, MEMy) in the module (MCx, MCy) which contains the data transmission device (IFx, IFy) and the memory (MEMx, MEMy) in the second module are mutually corresponding memories.

26. Data transmission device according to one of Claims 1 to 5,
**characterized**
**in that** the data transmission device (IFx, IFy) is able to become the bus master on a bus (BUSx, BUSy) connecting the data transmission device and the second device (CPUy, PERy0-PERy4, MEMy) to one another, and forwards the data which are to be forwarded via the bus to the second device at its own behest.

27. Data transmission device according to one of Claims 1 to 5,
**characterized**
**in that** the data transmission device (IFx, IFy) ascertains the information about the station to which the data to be forwarded need to be transmitted within the second device (CPUy, PERy0-PERy4, MEMy) from the address which was used to address the data transmission device when the data to be forwarded were supplied to it.

28. Data transmission device according to Claim 27,
**characterized**
**in that** the information about the station to which the data to be forwarded need to be transmitted within the second device (CPUy, PERy0-PERy4, MEMy) comprises the number of an address range and an address offset specifying a particular address within this address range.

29. Data transmission device according to Claim 28,
**characterized**
**in that** the number used for the address range is a number which is associated with the address range covering the address which was used to address the data transmission device (IFx, IFy) when the data to be forwarded were supplied to it.

30. Data transmission device according to Claim 28 or 29,
**characterized**
**in that** the address offset used is a portion of the address which was used to address the data transmission device (IFx, IFy) when the data to be forwarded were supplied to it.

31. Data transmission device according to Claim 30,
**characterized**
**in that** the portion of the address which was used to address the data transmission device (IFx, IFy) when the data to be forwarded were supplied to it, which portion is used as the address offset, is an address portion which specifies a particular address within the address range covering the address which was used to address the data transmission device when the data to be forwarded were supplied to it.

32. Data transmission device according to one of the preceding claims,
**characterized**
**in that** one of the devices between which data are transmitted using the data transmission device (IFx, IFy) is part of the module (MCx, MCy) which contains the data transmission device, and in that the other device is another module (MCx, MCy) or is part of another module.

33. Data transmission device according to one of the preceding claims,
**characterized**
**in that** the data transmission device (IFx, IFy) is an interface for the module (MCx, MCy) which contains the data transmission device, and this interface can be used by the module which contains the data transmission device to transmit data to another module, and said interface can be used by another module to transmit data to the module which contains the data transmission device.

34. Data transmission device according to Claim 32 or 33,
**characterized**
**in that** the module (MCx, MCy) which contains the data transmission device (IFx, IFy) is a program-controlled unit.

35. Data transmission device according to one of claims 32 to 34,
**characterized**
**in that** the other module (MCx, MCy) is a program-controlled unit.

36. Data transmission device according to one of Claims 32 to 35,
**characterized**
**in that** each of the modules (MCx, MCy) contains a data transmission device (IFx, IFy), and in that data to be transmitted from the first device (CPUx, PERx0-PERx4, MEMx) to the second device (CPUy, PERy0-PERy4, MEMy) are transmitted using the data transmission device in the module which contains the first device and using the data transmission device in the other module.

37. Data transmission device according to Claim 36,
**characterized**
**in that** the data transmission devices (IFx, IFy) are data transmission devices of identical design and/or operation.

38. Data transmission device according to one of Claims 32 to 37,
**characterized**
**in that** the module which contains the data transmission device (IFx, IFy) and the other module are identical modules (MCx, MCy).

39. Data transmission device according to one of Claims 1 to 31,
**characterized**
**in that** the data transmission device (IFx, IFy), the first device (CPUx, PERx0-PERx4, MEMx) and the second device (CPUy, PERy0-PERy4, MEMy) are part of the same module.

40. Data transmission device according to Claim 39,
**characterized**
**in that** the module which contains the data transmission device (IFx, IFy) contains a second data transmission device,
- where the first data transmission device (IFx) is connected to a first internal bus (BUSx) in the module, and the second data transmission device (IFy) is connected to a second internal bus (BUSy) in the module, and
- where data to be transmitted from the first device (CPUx, PERx0-PERx4 MEMx) to the second device (CPUy, PERy0-PERy4, MEMy) are transmitted via the first internal bus (BUSx) to the first data transmission device (IFx), from there to the second data transmission device via a connection (V) connecting the first data transmission device and the second data transmission device (IFy) to one another, and from the second data transmission device via the second internal bus (BUSy) to the second device.

41. Data transmission device according to Claim 39,
**characterized**
**in that** the module which contains the data transmission device (IFx) contains a second data transmission device (IFy),
- where the first data transmission device is connected to a first internal bus (BUSx) in the module, and the second data transmission device is connected to a second internal bus (BUSy) in the module, and
- where data to be transmitted from the second device (CPUy, PERy0-PERy4, MEMy) to the first device (CPUx, PERx0-PERx4, MEMx) are transmitted via the second internal bus (BUSy) to the second data transmission device (IFy), from there to the first data transmission device via a connection (V) connecting the second data transmission device and the first data transmission device (IFx) to one another, and from the first data transmission device via the first internal bus (BUSx) to the first device.

42. Data transmission device according to one of Claims 39 to 41,
**characterized**
**in that** the first data transmission device (IFx) and the second data transmission device (IFy) are data transmission devices of identical design and/or operation.

43. Data transmission device according to one of Claims 39 to 42,
**characterized**
**in that** the module is a program-controlled unit.

## Revendications

1. Dispositif de transmission de données permettant d'acheminer des données reçues par un premier système (CPUx, Perx0-PERx4, MEMx) et destinées à un second système (CPUy, PERy0-PERy4, MEMy) vers le second système,
- au moins le premier système faisant partie intégrante du module (µCx) comportant le dispositif de transmission de données,
- le dispositif de transmission de données transmettant au second système, outre les données à acheminer, également une information relative à l'endroit auquel les données à acheminer doivent être transmises à l'intérieur du second système, et
- l'information relative à l'endroit auquel les données à acheminer doivent être transmises à l'intérieur du second système, comprenant le numéro d'une plage d'adresses et un décalage d'adresse spécifiant une adresse donnée à l'intérieur de cette plage d'adresses,
**caractérisé en ce que**,
avant d'acheminer des données au second système (CPUy, PERy0-PERy4, MEMy), le dispositif de transmission de données (IFx, IFy) transmet au second système une information relative à la plage d'adresses à affecter au numéro de plage d'adresses.

2. Dispositif de transmission de données selon la revendication 1, **caractérisé en ce que** l'information relative à la plage d'adresses à affecter au numéro de plage d'adresses comprend une adresse permettant de déterminer l'emplacement de la plage d'adresses à affecter.

3. Dispositif de transmission de données selon la revendication 2, **caractérisé en ce que** l'adresse est l'adresse du début de la plage d'adresses à affecter.

4. Dispositif de transmission de données selon l'une des revendications 1 à 3, **caractérisé en ce que** le dispositif de transmission de données (IFx, IFy) ne transmet au second système (CPUy, PERy0-PERy4, MEMy) une information relative à la plage d'adresses à affecter au numéro de plage d'adresses que si un changement dans l'affectation doit intervenir.

5. Dispositif de transmission de données selon l'une des revendications 1 à 4, **caractérisé en ce que** le dispositif de transmission de données (IFx, IFy) transmet au second système une information relative à la plage d'adresses à affecter au numéro de plage d'adresses pour chaque numéro de plage d'adresses.

6. Dispositif de transmission de données selon l'une des revendications précédentes, **caractérisé en ce que** le dispositif de transmission de données (IFx, IFy) comprend un système de prédiction d'adresse qui tente de prédire l'adresse ou une partie de l'adresse à laquelle les données à acheminer doivent être transmises à l'intérieur du second système (CPUy, PERy0-PERy4, MEMy).

7. Dispositif de transmission de données selon la revendication 6, **caractérisé en ce que**,
- lorsque la prédiction faite par le système de prédiction d'adresse est correcte, le dispositif de transmission de données (IFx, IFy) ne transmet pas d'information ou moins d'information au second système (CPUy, PERy0-PERy4, MEMy) relative à l'endroit auquel les données à acheminer doivent être transmises à l'intérieur du second système.

8. Dispositif de transmission de données selon la revendication 6, **caractérisé en ce que**,
- outre les données à acheminer, le dispositif de transmission de données (IFx, IFy) reçoit également une information relative à l'endroit auquel les données à acheminer doivent être transmises à l'intérieur du second système (CPUy, PERy0-PERy4, MEMy), et
- **en ce que**, lorsque le dispositif de transmission de données (IFx, IFy) ne reçoit pas d'information ou moins d'information relative à l'endroit auquel les données à acheminer doivent être transmises à l'intérieur du second système (CPUy, PERy0-PERy4, MEMy), il détermine cet endroit en utilisant le résultat de prédiction du système de prédiction d'adresse.

9. Dispositif de transmission de données selon l'une des revendications 1 à 5, **caractérisé en ce que** le dispositif de transmission de données (IFx, IFy) vérifie si on peut considérer que le second système (CPUy, PERy0-PERy4, MEMy) est en mesure de déterminer l'endroit auquel les données à acheminer doivent être transmises à l'intérieur du second système, et si on peut déterminer s'il ne reçoit pas d'information ou moins d'information relative à l'endroit concerné, et **en ce que**, si tel est le cas, le dispositif de transmission de données ne transmet pas d'information ou moins d'information relative à l'endroit auquel les données à acheminer doivent être transmises à l'intérieur du second système.

10. Dispositif de transmission de données selon l'une des revendications précédentes, **caractérisé en ce que**, outre les données à acheminer, le dispositif de transmission de données (IFx, IFy) reçoit également du premier système (CPUx, PERx0-PERx4, MEMx) une information relative à l'endroit auquel les données à acheminer doivent être transmises à l'intérieur du second système (CPUy, PERy0-PERy4, MEMy), et **en ce que**, si le dispositif de transmission de données ne reçoit pas d'information ou moins d'information du premier système relative à l'endroit auquel les données à acheminer doivent être transmises à l'intérieur du second système, il détermine cet endroit en utilisant des informations disponibles dans le dispositif de transmission de données.

11. Dispositif de transmission de données selon la revendication 9 ou 10, **caractérisé en ce que** le dispositif de transmission de données (IFx, IFy) comporte un système de prédiction d'adresse qui tente de prédire l'adresse ou une partie de l'adresse à laquelle les données à acheminer doivent être transmises à l'intérieur du second système (CPUy, PERy0-PERy4, MEMy).

12. Dispositif de transmissions de données selon la revendication 11, **caractérisé en ce que**, si la prédiction faite par le système de prédiction d'adresse est correcte, le dispositif de transmission de données (IFx, IFy) ne transmet pas d'information ou moins d'information au second système (CPUy, PERy0-PERy4, MEMy) relative à l'endroit auquel les données à acheminer doivent être transmises à l'intérieur du second système.

13. Dispositif de transmission de données selon la revendication 11, **caractérisé en ce que**, si le dispositif de transmission de données (IFx, IFy) ne reçoit pas d'information ou moins d'information relative à l'endroit auquel les données à acheminer doivent être transmises à l'intérieur du second système (CPUy, PERy0-PERy4, MEMy), il détermine cet endroit en utilisant le résultat de prédiction du système de prédiction d'adresse.

14. Dispositif de transmission de données selon l'une des revendications 1 à 5, **caractérisé en ce que** le dispositif de transmission de données (IFx, IFy) est capable de générer un signal de demande d'interruption à l'initiative du premier systéme (CPUx, PERx0-PERx4 MEMx) ou à l'initiative du second système (CPUy, PERy0-PERy4, MEMy).

15. Dispositif de transmission de données selon la revendication 14, **caractérisé en ce que** le dispositif de transmission de données (IFx, IFy) peut être amené à générer un signal de demande d'interruption par des données qui lui ont été envoyées par le premier systéme (CPUx, PERx0-PERx4 MEMx) ou par le second système (CPUy, PERy0-PERy4, MEMy).

16. Dispositif de transmission de données selon la revendication 15, **caractérisé en ce que** le dispositif de transmission de données (IFx, IFy) n'achemine pas les données qui l'amènent à générer un signal de demande d'interruption.

17. Dispositif de transmission de données selon l'une des revendications 14 à 16, **caractérisé en ce que** le dispositif de transmission de données (IFx, IFy) peut être amené à générer différents signaux de demande d'interruption entraînant l'exécution de différentes routines de service d'interruption.

18. Dispositif de transmission de données selon l'une des revendications 1 à 5, **caractérisé en ce que** les adresses par l'intermédiaire desquelles le dispositif de transmission de données (IFx, IFy) est adressable lors de la transmission des données à acheminer depuis le premier système (CPUx, PERx0-PERx4, MEMx) vers le dispositif de transmission de données sont choisies de manière à correspondre entièrement ou partiellement aux adresses utilisées pour adresser d'autres composants du module (µCx, µCy) contenant le dispositif de transmission de données.

19. Dispositif de transmission de données selon la revendication 18, **caractérisé en ce que** les adresses par l'intermédiaire desquelles le dispositif de transmission de données (IFx, IFy) est adressable lors de la transmission des données à acheminer depuis le premier système (CPUx, PERx0-PERx4, MEMx) vers le dispositif de transmission de données sont choisies de manière à correspondre entièrement ou partiellement aux adresses utilisées pour adresser une mémoire (MEMx, MEMy) du module (µCx, µCy) contenant le dispositif de transmission de données.

20. Dispositif de transmission de données selon la revendication 19, **caractérisé en ce que** le dispositif de transmission de données fait en sorte qu'un accès à la mémoire entraîne un accès correspondant au second système.

21. Dispositif de transmission de données selon la revendication 19, **caractérisé en ce que** le dispositif de transmission de données (IFx, IFy) achemine également vers le second système (CPUy, PERy0-PERy4, MEMy) des données envoyées à la mémoire (MEMx, MEMy) et enregistrées dans celle-ci.

22. Dispositif de transmission de données selon la revendication 21, **caractérisé en ce que** les données acheminées vers le second système (CPUy, PERy0-PERy4, MEMy) sont écrites dans une mémoire (MEMy) contenue dans le second système.

23. Dispositif de transmission de données selon la revendication 22, **caractérisé en ce que** le dispositif de transmission de données (IFx, IFy) fait en sorte que le contenu de la mémoire (MEMy) du second système (CPUy, PERy0-PERy4, MEMy) soit une copie du contenu de la mémoire (MEMy) du module (µCx, µCy) contenant le dispositif de transmission de données (IFx, IFy).

24. Dispositif de transmission de données selon la revendication 22 ou 23, **caractérisé en ce que** le module (µCx, µCy) contenant le dispositif de transmission de données (IFx, IFy) et le second système (CPUy, PERy0-PERy4, MEMy) sont des modules identiques.

25. Dispositif de transmission de données selon la revendication 24, **caractérisé en ce que** la mémoire (MEMx, MEMy) du module (µCx, µCy) contenant le dispositif de transmission de données (IFx, IFy) et la mémoire (MEMx, MEMy) du second module sont des mémoires correspondant l'une à l'autre.

26. Dispositif de transmission de données selon l'une des revendications 1 à 5, **caractérisé en ce que** le dispositif de transmission de données (IFx, IFy) peut devenir maître de bus d'un bus (BUSx, BUSy) reliant le dispositif de transmission de données au second système (CPUy, PERy0-PERy4, MEMy) et achemine, de sa propre initiative, par l'intermédiaire du bus, au second système les données à acheminer.

27. Dispositif de transmission de données selon l'une des revendications 1 à 5, **caractérisé en ce que** le dispositif de transmission de données (IFx, IFy) détermine l'information relative à l'endroit auquel les données à acheminer doivent être transmises à l'intérieur du second système (CPUy, PERy0-PERy4, MEMy) à partir de l'adresse utilisée pour adresser le dispositif de transmission de données lorsque les données à acheminer lui ont été envoyées.

28. Dispositif de transmission de données selon la revendication 27, **caractérisé en ce que** l'information relative à l'endroit auquel les données à acheminer doivent être transmises à l'intérieur du second système (CPUy, PERy0-PERy4, MEMy) comprend le numéro d'une plage d'adresses et un décalage d'adresse spécifiant une adresse donnée à l'intérieur de cette plage d'adresses.

29. Dispositif de transmission de données selon la revendication 28, **caractérisé en ce qu'**on utilise comme numéro de la plage d'adresses un numéro qui est affecté à la plage d'adresses à laquelle est affiliée l'adresse utilisée pour adresser le dispositif de transmission de données (IFx, IFy) lorsque les données à acheminer lui ont été envoyées.

30. Dispositif de transmission de données selon la revendication 28 ou 29, **caractérisé en ce qu'**on utilise comme décalage d'adresse une partie de l'adresse utilisée pour adresser le dispositif de transmission de données (IFx, IFy) lorsque les données à acheminer lui ont été envoyées.

31. Dispositif de transmission de données selon la revendication 30, **caractérisé en ce que** la partie, servant de décalage d'adresse, de l'adresse utilisée pour adresser le dispositif de transmission de données (IFx, IFy) lorsque les données à acheminer lui ont été envoyées, est une partie d'adresse par l'intermédiaire de laquelle une adresse donnée est spécifiée à l'intérieur de la plage d'adresses, à laquelle est affiliée l'adresse utilisée pour adresser le dispositif de transmission de données lorsque les données à acheminer lui ont été envoyées.

32. Dispositif de transmission de données selon l'une des revendications précédentes, **caractérisé en ce que** l'un des systèmes entre lesquels des données sont transmises par l'intermédiaire du dispositif de transmission de données (IFx, IFy) fait partie intégrante du module (µCx, µCy) contenant le dispositif de transmission de données, et **en ce que** l'autre système est un autre module (µCx, µCy) ou fait partie intégrante d'un autre module.

33. Dispositif de transmission de données selon l'une des revendications précédentes, **caractérisé en ce que** le dispositif de transmission de données (IFx, IFy) est une interface du module (µCx, µCy) contenant le dispositif de transmission de données, par l'intermédiaire de laquelle le module contenant le dispositif de transmission de données peut transmettre des données à un autre module, et par l'intermédiaire de laquelle un autre module peut transmettre des données au module contenant le dispositif de transmission de données.

34. Dispositif de transmission de données selon la revendication 32 ou 33, **caractérisé en ce que** le module (µCx, µCy) contenant le dispositif de transmission de données (IFx, IFy) est une unité à commande par programme.

35. Dispositif de transmission de données selon l'une des revendications 32 à 34, **caractérisé en ce que** l'autre module (µCx, µCy) est une unité à commande par programme.

36. Dispositif de transmission de données selon l'une des revendications 32 à 35, **caractérisé en ce que** chacun des modules (µCx, µCy) contient un dispositif de transmission de données (IFx, IFy), et **en ce que** des données à transmettre du premier système (CPUx, PERx0-PERx4, MEMx) au second système (CPUy, PERy0-PERy4, MEMy) sont transmises par l'intermédiaire du dispositif de transmission de données du module contenant le premier système et par l'intermédiaire du dispositif de transmission de données de l'autre module.

37. Dispositif de transmission de données selon la revendication 36, **caractérisé en ce que** les dispositifs de transmission de données (IFx, IFy) sont des dispositifs de transmission de données de conception identique et/ou de fonctionnement identique.

38. Dispositif de transmission de données selon l'une des revendications 32 à 37, **caractérisé en ce que** le module contenant le dispositif de transmission de données (IFx, IFy) et l'autre module sont des modules (µCx, µCy) identiques.

39. Dispositif de transmission de données selon l'une des revendications 1 à 31, **caractérisé en ce que** le dispositif de transmission de données (IFx, IFy), le premier système (CPUx, PERx0-PERx4, MEMx) et le second système (CPUy, PERy0-PERy4, MEMy) sont des parties intégrantes du même module.

40. Dispositif de transmission de données selon la revendication 39, **caractérisé en ce qu'**un second dispositif de transmission de données est prévu dans le module contenant le dispositif de transmission de données (IFx, IFy),
- le premier dispositif de transmission de données (IFx) étant connecté à un premier bus interne (BUSx) du module, et le second dispositif de transmission de données (IFx) étant connecté à un second bus interne (BUSy) du module, et
- des données à transmettre du premier système (CPUx, PERx0-PERx4, MEMx) au second système (CPUy, PERy0-PERy4, MEMy) étant transmises par le premier bus interne (BUSx) vers le premier dispositif de transmission de données (IFx), puis par une liaison (V) reliant le premier dispositif de transmission au second dispositif de transmission de données (IFy) vers le second dispositif de transmission de données qui les transmet au second système par l'intermédiaire du second bus interne (BUSy).

41. Dispositif de transmission de données selon la revendication 39, **caractérisé en ce qu'**un second dispositif de transmission de données (IFy) est prévu dans le module contenant le dispositif de transmission de données (IFx),
- le premier dispositif de transmission de données étant connecté à un premier bus interne (BUSx) du module, et le second dispositif de transmission de données (IFx) étant connecté à un second bus interne (BUSy) du module, et
- des données à transmettre du second système (CPUy, PERy0-PERy4, MEMy) au premier système (CPUx, PERx0-PERx4, MEMx) étant transmises par le second bus interne (BUSy) vers le second dispositif de transmission de données (IFy), puis par une liaison (V) reliant le second dispositif de transmission de données au premier dispositif de transmission de données (IFx) vers le premier dispositif de transmission de données qui les transmet au premier système par l'intermédiaire du premier bus interne (BUSx).

42. Dispositif de transmission de données selon l'une des revendications 39 à 41, **caractérisé en ce que** le premier dispositif de transmission de données (IFx) et le second dispositif de transmission de données (IFy) sont des dispositifs de transmission de données de conception identique et/ou de fonctionnement identique.

43. Dispositif de transmission de données selon l'une des revendications 39 à 42, **caractérisé en ce que** le module est une unité à commande par programme.
